# EUROPEAN PATENT APPLICATION

(11) **EP 2 641 736 A1**
(43) Date of publication of application: **25.09.2013**
(21) Application number: 11841519.9
(22) Date of filing: 17.11.2011
(51) Int. Cl.: B32B 27/38, B32B 15/092, B32B 27/20

(54) **MULTILAYER RESIN SHEET AND RESIN-SHEET LAMINATE**

(30) Priority: 18.11.2010 JP 2010257765; 23.03.2011 JP 2011064923
(71) Applicant: Hitachi Chemical Co., Ltd., Chiyoda-ku Tokyo 100-6606 (JP)
(72) Inventor: GOTOH, Masaki, Tsukuba-shi Ibaraki 300-4247 (JP); KATAGI, Hideyuki, Chikusei-shi Ibaraki 308-8524 (JP)
(74) Representative: HOFFMANN EITLE
(86) International application number: PCT/JP2011/076551
(87) International publication number: WO 2012/067194

(57) **Abstract**

The invention provides a multilayer resin sheet comprising: a resin layer that includes a first epoxy resin, a curing agent and an inorganic filler; and an adhesive layer that is disposed on at least one surface of the resin layer and includes a second epoxy resin and an inorganic filler, the adhesive layer including the inorganic filler in an amount of from 30 mass% to 80 mass%, and the resin layer including the inorganic filler in an amount of from 80 mass% to 93 mass%.

## Description

### Technical Field

The present invention relates to a multilayer resin sheet and a resin sheet laminate.

### Background Art

In electrical and electronic instruments such as motors, electric generators, printed wiring boards and IC chips, the amount of heat generated from semiconductors or the like has been increasing due to a decrease in size of the instruments and an increase in density of the semiconductors or the like. Therefore, there has been demand for excellent radiation properties of insulating materials that are used for electronic devices.

As the insulating materials, inorganic ceramics, organic materials and the like have been widely used. Although inorganic ceramics are highly thermally conductive, they are expensive and inferior in insulation performance as compared with organic materials. In contrast, organic materials are low in thermal conductivity although their insulation performances are extremely high. A composite material, which includes an organic material and a highly thermally conductive filler, is a possible material that achieves both insulation properties and thermal conductivity.

For example, Japanese Patent Application Laid-Open (JP-A) No. 2008-13759 discloses that a composite system of a common bisphenol A epoxy resin and an oxidized alumina filler has a thermal conductivity of 3.8 W/mK (xenon flash method), and that a composite system of a liquid crystalline epoxy resin having a mesogenic group and an alumina filler has a thermal conductivity of 9.4 W/mK (xenon flash method).
It is also disclosed that a cured product of resin including an epoxy resin having a mesogenic group and a curing agent for the epoxy resin exhibits a high thermal conductivity, and that the cured product exhibits an even higher thermal conductivity by including a filler powder, for example, in Japanese Patent No. 4118691.

### DISCLOSURE OF THE INVENTION

### Technical Problem

However, although the composite materials described in JP- A No. 2008-13759 and Japanese Patent No. 4118691 exhibit an excellent thermal conductivity as an organic-inorganic composite sheet (hereinafter, also referred to as a "resin sheet"), the are cases in which the materials are less compatible with respect to actual processes. For example, although the resin sheets are generally required to be highly adhesive with respect to a surface of a metal such as aluminum or copper, or a surface of an organic material, there are cases in which adhesion with respect to an adherend is insufficient due to a high filling rate of an inorganic filler that is necessary for achieving a high thermal conductivity. The reason for this is thought to be that, for example, an area at which the material is actually in contact with an adherend and bonded thereto is insufficient. In addition, there are cases in which a problem such as cracking may occur during punching of an uncured resin sheet due to insufficient flexibility that is caused by a high filling rate of an inorganic filler component.

The present invention aims to solve the problems set forth above, and provides a multilayer resin sheet that is highly flexible and capable of forming a cured multilayer resin sheet that exhibits a high thermal conductivity and excellent insulation properties, adhesion and resistance to a thermal shock. The present invention also aims to provide a multilayer resin sheet with a metal foil, a cured multilayer resin sheet, a resin sheet laminate and a semiconductor device that are obtained from the multilayer resin sheet.

### Solution to Problem

The present invention encompasses the following embodiments.
<1> A multilayer resin sheet including: a resin layer that includes a first epoxy resin, a curing agent and an inorganic filler, and an adhesive layer that is disposed on at least one surface of the resin layer and includes a second epoxy resin and an inorganic filler, the adhesive layer including the inorganic filler in an amount of from 30 mass% to 80 mass%, and the resin layer including the inorganic filler in an amount of from 80 mass% to 93 mass%.

<2> The multilayer resin sheet according to <1>, wherein the resin layer has an average thickness of from 50 µm to 500 µm, and the adhesive layer has an average thickness of from 1 µm to 25 µm.

<3> The multilayer resin sheet according to <1> or <2>, wherein the adhesive layer further includes a high molecular weight component that has a weight average molecular weight of 10000 or more and a glass transition temperature of 50°C or less.

<4> The multilayer resin sheet according to any one of <1> to <3>, wherein the first epoxy resin has a mesogenic group.

<5> The multilayer resin sheet according to <4>, wherein the mesogenic group has an asymmetric structure in a planar structure thereof.

<6> The multilayer resin sheet according to <4> or <5>, wherein the mesogenic group has a structure in which two divalent functional groups that are derived from benzene are linked through a divalent linking group.

<7> The multilayer resin sheet according to any one of <1> to <6>, wherein the curing agent is a phenol novolac resin.

<8> The multilayer resin sheet according to <7>, wherein the phenol novolac resin includes a compound in which at least one phenol compound selected from a monofunctional phenol and a bifunctional phenol is linked through a methylene chain.

<9> The multilayer resin sheet according to <8>, wherein the phenol compound includes at least one selected from catechol and resorcinol.

<10> The multilayer resin sheet according to any one of <1> to <9>, wherein the resin layer has a density of from 1.8 g/cm³ to 3.3 g/cm³.

<11> A multilayer resin sheet with a metal foil, including the multilayer resin sheet according to any one of <1> to <10> and a metal foil disposed on at least one adhesive layer of the multilayer resin sheet.

<12> A cured multilayer resin sheet that is a cured product of the multilayer resin sheet according to any one of <1> to <10>.

<13> A resin sheet laminate, including a cured multilayer resin sheet that is a cured product of the multilayer resin sheet according to any one of <1> to <10> and a metal plate or a radiator plate disposed on at least one surface of the cured multilayer resin sheet.

<14> A semiconductor device, including the resin sheet laminate according to <13> and a semiconductor element disposed on the resin sheet laminate.

### Effect of the Invention

Accordance to the present invention, it is possible to provide a multilayer resin sheet that is highly flexible and capable of forming a cured multilayer resin sheet that exhibits a high thermal conductivity and excellent insulation properties, adhesion and resistance to a thermal shock. It is also possible to provide a multilayer resin sheet with a metal foil, a cured multilayer resin sheet, a resin sheet laminate and a semiconductor device that are obtained from the multilayer resin sheet.

### BRIEF DESCRIPTION OF DRAWINGS

Fig. 1 is a schematic cross-sectional view that illustrates an example of a constitution of a power semiconductor device formed by using the multilayer resin sheet according to the present invention.
Fig. 2 is a schematic cross-sectional view that illustrates an example of a constitution of a power semiconductor device formed by using the multilayer resin sheet according to the present invention.
Fig. 3 is a schematic cross-sectional view that illustrates an example of a constitution of a power semiconductor device formed by using the multilayer resin sheet according to the present invention.
Fig. 4 is a schematic cross-sectional view that illustrates an example of a constitution of an LED light bar formed by using the multilayer resin sheet according to the present invention.
Fig. 5 is a schematic cross-sectional view that illustrates an example of a constitution of an LED bulb formed by using the multilayer resin sheet according to the present invention.
Fig. 6 is a schematic cross-sectional view that illustrates an example of a constitution of an LED bulb formed by using the multilayer resin sheet according to the present invention.
Fig. 7 is a schematic cross-sectional view that illustrates an example of a constitution of an LED substrate formed by using the multilayer resin sheet according to the present invention.

### BEST MODE FOR CARRYING OUT THE INVENTION

In the present description, the term "step" includes not only an independent step but also a step that is not clearly distinguishable from other steps, as long as the effect of the step is achieved. Moreover, in the present description, a numeral value range described with the term "to" refers to a range that includes values described before and after the "to" as a minimum value and a maximum value, respectively. Furthermore, in a case in which there are two or more substances that correspond to a single component, the amount of the component in the composition refers to the total amount of the two or more substances, unless otherwise noted.

### <Multilayer Resin Sheet>

The multilayer resin sheet according to the present invention includes a resin layer that includes a first epoxy resin, a curing agent and an inorganic filler, and an adhesive layer that is disposed on at least one surface of the resin layer and includes a second epoxy resin and an inorganic filler. The adhesive layer includes the inorganic filler in an amount of from 30 mass% to 80 mass%, and the resin layer includes the inorganic filler in an amount of from 80 mass% to 93 mass%. From the multilayer resin sheet in which the contents of the inorganic filler in the resin layer and the adhesive layer are specified, it is possible to form a cured multilayer resin sheet that exhibits a high thermal conductivity and excellent insulation properties, adhesion and resistance to a thermal shock. Further, the multilayer resin sheet is highly flexible in an uncured state, and occurrence of a failure such as cracking may be suppressed even when the multilayer resin sheet in an uncured state is subjected to a punching process or the like.

### [Resin Layer]

The resin layer that constitutes the multilayer resin sheet includes at least one first epoxy resin, at least one curing agent, and at least one inorganic filler, and the content of the inorganic filler in the resin layer is from 80 mass% to 93 mass%. The average thickness of the resin layer is not specifically restricted. From the viewpoint of thermal conductivity and insulation properties, the average thickness is preferably from 50 µm to 500 µm.

### (First Epoxy Resin)

The first epoxy resin (prepolymer) included in the resin layer may be an epoxy resin that is commonly used without particular limitation. The first epoxy resin is preferably an epoxy resin that exhibits an excellent thermal conductivity after curing.
Examples of the first epoxy resin include bisphenol A epoxy resins, bisphenol F epoxy resins, bisphenol S epoxy resins, alicyclic epoxy resins, aliphatic chain epoxy resins, biphenyl epoxy resins, phenol novolac epoxy resins, phenol biphenylene novolac epoxy resins, cresol novolac epoxy resins, bisphenol A novolac epoxy resins, bisphenol F novolac epoxy resins, dicyclopentadiene epoxy resins, glycidyl ether compounds of polyfunctional phenols, glycidyl ether compounds of bifunctional alcohols, and these epoxy resins that are aralkyl-substituted or hydrogenated.

The first epoxy resin preferably includes at least one epoxy resin having a mesogenic group (hereinafter, also referred to as a "specific epoxy resin"). The epoxy resin having a mesogenic group preferably has the mesogenic group in an epoxy resin skeleton and forms a higher-order structure upon curing, from the viewpoint of achieving a high thermal conductivity. Details of an epoxy resin having a mesogenic group are described in, for example, Japanese Patent No. 4118691. The epoxy resin having a mesogenic group may be a commercial product or may be newly produced.

The mesogenic group refers to a functional group that facilitates exhibition of liquid crystallinity or crystallinity via an intermolecular interaction. The mesogenic group preferably has a structure in which divalent functional groups derived from benzene are linked through a divalent linking group, from the viewpoint of thermal conductivity. The divalent functional group derived from benzene refers to a functional group having a structure of benzene or a benzene derivative from which two hydrogen atoms on the aromatic ring are removed. Specific examples of the mesogenic group include a biphenyl group, a phenyl benzoate group, an azobenzene group, a stilbene group, and derivatives thereof.

Specific examples of the epoxy resin having a mesogenic group include 4-(oxilanylmethoxy)benzoic acid-4,4'-[1,8-octanediylbis (oxy)]bisphenol ester, 4-(oxilanylmethoxy)benzoic acid-4,4'-[1,6-hexanediylbis(oxy)]bisphenol ester, 4-(oxilanylmethoxy)benzoic acid-4,4'-[1,4-butanediylbis(oxy)]bisphenol ester, 4-(4-oxilanylbutoxy)benzoic acid-1,4'-phenylene ester, 4,4'-biphenol diglycidyl ether, 3,3',5,5'-tetramethyl-4,4'-biphenol diglycidyl ether, and 1-{(3-methyl-4-oxilanylmethoxy)phenyl}-4-(4-oxilanylmethoxyphenyl)-1-cyclohexene.

In the epoxy resin having a mesogenic group, the mesogenic group preferably has an asymmetric structure in a planar structure thereof. Further, the mesogenic group preferably has a structure in which two divalent functional groups that are derived from benzene and have different structures from each other are linked through a divalent linking group. The expression "the mesogenic group has an asymmetric structure in a planar structure thereof" refers to that the structural formula of the mesogenic group that is drawn on a plane is asymmetric.

Specific examples of the epoxy resin having a mesogenic group that has an asymmetric structure includes 1-{(3-methyl-4-oxilanylmethoxy)phenyl}-4-(4-oxilanylmethoxyphenyl)-1-cyclohexene.

The higher-order structure that can be formed by an epoxy resin having a mesogenic group refers to a structure having a micro-arrangement, such as a crystal phase or a liquid crystal phase. The existence of a higher-order structure can be easily confirmed by observation with a polarizing microscope. Specifically, the existence of a higher-order structure can be confirmed by the existence of interference fringes, which are caused by a depolarization phenomenon, by ordinary observation in a crossed nicols state. The higher-order structure usually exists in the form of an island, and each island that forms a domain structure is referred to as a higher-order structure. The higher-order structure includes a covalent bond.

Specific examples of the epoxy resin that exhibits a higher-order structure include YL-6121H (manufactured by Japan Epoxy Resins Co., Ltd.), YX-4000H (manufactured by Japan Epoxy Resins Co., Ltd.) and YSLV-80XY (manufactured by Tohto Kasei Co., Ltd.) as bicyclic epoxy resins; and 1-{(3-methyl-4-oxilanylmethoxy)phenyl}-4-(4-oxilanylmethoxyphenyl)-1-cyclohexene as tricyclic epoxy resins. From the viewpoint of handleability and a high thermal conductivity, 1-{(3-methyl-4-oxilanylmethoxy)phenyl}-4-(4-oxilanylmethoxyphenyl)-1-cyclohexene is preferred.

The content of the first epoxy resin (preferably, an epoxy resin having a mesogenic group) in the resin layer is not specifically restricted. From the viewpoint of thermal conductivity and heat resistance, it is preferably from 1 mass% mass% to 20 mass% in the solid content of the resin layer, more preferably from 5 mass% to 15 mass%, further preferably from 6 mass% to 12 mass%. The solid content of the resin layer refers to components that constitute the resin layer excluding volatile components.

### (Curing Agent)

The resin layer includes at least one curing agent. The curing agent is not specifically restricted as long as it is capable of curing the first epoxy resin (prepolymer). Specific examples of the curing agent include polyaddition-type curing agents such as acid anhydride-based curing agents, amine-based curing agents, phenol-based curing agents, and mercaptan-based curing agents; and latent curing agents such as imidazoles. The curing agent is preferably at least one selected from an amine-based curing agent and a phenol-based curing agent, from the viewpoint of thermal resistance and adhesiveness. A phenol-based curing agent is more preferred from the viewpoint of preservation stability. Among the curing agents, a curing agent having a structure that enables exhibition of a higher-order structure upon curing of an epoxy resin having a mesogenic group, and achievement of a high thermal conductivity, is preferred.

The amine-based curing agent is not specifically restricted, and may be selected appropriately from ordinarily used amine-based curing agents. From the viewpoint of improving the properties of a cured product, an amine-based curing agent having two or more functional groups is preferred. From the viewpoint of thermal conductivity, a polyfunctional amine-based curing agent having a rigid skeleton is more preferred. Specific examples of bifunctional amine-based curing agents include 4,4'-diaminodiphenylmethane, 4,4'-diaminodiphenyl ether, 4,4'-diaminodiphenylsulfone, 4,4'-diamino-3,3'-dimethoxybiphenyl, 4,4'-diaminophenylbenzoate, 1,5-diaminonaphthalene, 1,3-diaminonaphthalene, 1,4-diaminonaphthalene and 1,8-diaminonaphthalene. In particular, 1,5-diaminonaphthalene is preferable as an amine-based curing agent that can express a high thermal conductivity in combination with an epoxy resin having a mesogenic group, and 1-{(3-methyl-4-oxilanylmethoxy)phenyl}-4-(4-oxilanylmethoxyphenyl)-1-cyclohexene.

The content ratio between the first epoxy resin and the amine-based curing agent (first epoxy resin/amine-based curing agent) is not specifically restricted. From the viewpoint of reactivity, thermal conductivity and adhesion, the ratio is preferably from 0.85 to 1.2, more preferably from 0.9 to 1.1, based on the epoxy equivalent.

The phenol-based curing agent may be appropriately selected from low molecular phenol compounds or phenol resins that are obtained from the low molecular phenol compounds. Examples of the low molecular phenol curing agents include monofunctional phenol compounds such as phenol, o-cresol, m-cresol and p-cresol; bifunctional phenol compounds such as catechol, resorcinol, hydroquinone, bisphenol A, bisphenol F and bisphenol S; and trifunctional phenol compounds such as 1,2,3-trihydroxybenzene, 1,2,4-trihydroxybenzene and 1,3,5-trihydroxy benzene. Other examples of the curing agent include phenol novolac resins in which low molecular phenol compounds are linked via a methylene chain. From the viewpoint of thermal conductivity, the phenol-based curing agent preferably includes at least one phenol novolac resin in which two or more molecules of at least one selected from a monofunctional phenol compound and a bifunctional phenol compound are linked via a methylene chain.

Furthermore, from the viewpoint of improving thermal conductivity, a bifunctional phenol compound such as catechol, resorcinol or hydroquinone is preferably used as the phenol-based curing agent. From the viewpoint of further improving thermal resistance, a phenol novolac curing agent in which bifunctional phenol compounds are linked via a methylene chain is preferred; a phenol novolac curing agent in which at least one kind of bifunctional phenol compounds selected from catechol, resorcinol and hydroquinone are linked via a methylene chain is more preferred; and a phenol novolac curing agent in which at least one kind of bifunctional phenol compounds selected from catechol and resorcinol are linked via a methylene chain is further preferred.

Specific examples of the phenol novolac curing agent in which bifunctional phenol compounds are linked via a methylene chain include novolac resins formed from a single kind of phenol compound, such as a catechol novolac resin, a resorcinol novolac resin and a hydroquinone novolac resin; and novolac resins formed from two or more kinds of phenol compounds, such as a catechol resorcinol novolac resin and a resorcinol hydroquinone novolac resin. From the viewpoint of thermal conductivity and thermal resistance, the phenol-based curing agent preferably includes at least one catechol resorcinol novolac resin.

The phenol novolac resin may also include a monomer that is a phenol compound that constitutes a phenol novolac resin. The content of the monomer that is a phenol compound that constitutes a novolac resin (hereinafter, also referred to as a "monomer content") is not specifically restricted, but is preferably from 5 mass% to 50 mass%, more preferably from 10 mass% to 45 mass%, further preferably from 15 mass% to 40 mass%.

When the monomer content is 5 mass% or more, an increase in viscosity of a novolac resin is suppressed and adhesion with respect to an inorganic filler is more improved. In addition, when the content is 50 mass% or less, the density of a higher-order structure is increased due to a crosslinking reaction during curing, thereby achieving superior thermal conductivity and thermal resistance.

From the viewpoint of reactivity, thermal conductivity and adhesion, the content ratio between the first epoxy resin and the phenol-based curing agent (first epoxy resin/phenol-based curing agent) is preferably from 0.85 to 1.2, more preferably from 0.9 to 1.1, based on the epoxy equivalent.

### (Inorganic Filler)

The resin layer includes at least one inorganic filler. The inorganic filler is not specifically restricted as long as the filler is a particulate inorganic substance having thermal conductivity. In particular, the inorganic filler is preferably not electrically conductive.
Examples of the nonconductive inorganic filler include aluminum oxide, magnesium oxide, aluminum nitride, boron nitride (such as hexagonal boron nitride or cubic boron nitride), silicon nitride, silicon oxide, aluminum hydroxide, barium sulfate and diamond. From the viewpoint of thermal conductivity and insulation properties, aluminum oxide is more preferred.
The inorganic filler may be used singly or as a mixture of two or more kinds.

The thermal conductivity of the inorganic filler is not specifically restricted. The thermal conductivity is preferably 30 W/mK or more, more preferably 100 W/mK or more, particularly preferably 200 W/mK or more. There is no restriction on the upper limit, but the thermal conductivity is usually 1100 W/mK or less.

The volume average particle diameter of inorganic filler particles is not specifically restricted. For example, the volume average particle diameter is preferably from 0.05 µm to 50 µm. The particle size distribution of the inorganic filler included in the resin layer is not specifically restricted. The inorganic filler may exhibit a particle size distribution curve having a single peak, or may exhibit a particle size distribution curve having two or more peaks. The particle size distribution curve of the inorganic filler preferably has at least two peaks, more preferably at least three peaks. When the particle size distribution curve has two or more peaks, an inorganic filler having a smaller particle size can be packed in spaces in an inorganic filler having a greater particle size. As a result, the packing density of the inorganic filler is increased as compared with a case in which an inorganic filler having a uniform particle size is used, thereby enabling exhibition of a higher thermal conductivity.

The inorganic filler that exhibits a particle size distribution curve having two or more peaks can be formed by, for example, mixing two or more inorganic fillers having different volume average particle sizes. The mixture rate of the two or more inorganic fillers having different volume average particle sizes is not specifically restricted, and may be appropriately selected depending on purposes. The particle size distribution and the volume average particle size of the inorganic filler are measured by laser diffractometry. The laser diffractometry measurement can be conducted with a laser diffraction scattering particle size distribution measuring device (e.g., LS230, manufactured by Beckman Coulter, Inc.)

When the inorganic filler is a mixture of two or more inorganic fillers having different volume average particle sizes, specifically, in a case of aluminum oxide, the inorganic filler preferably includes from 60 mass% to 75 mass% of an inorganic filler having a volume average particle size of from 16 µm to 20 µm, from 10 mass% to 20 mass% of an inorganic filler having a volume average particle size of from 2 µm to 4 µm, and from 10 mass% to 20 mass% of an inorganic filler having a volume average particle size of from 0.3 µm to 0.5 µm, respectively, in 100 mass% of the whole inorganic filler. With the mixture rate set forth above, the density of the inorganic filler can be further increased.

Whether or not the resin layer includes two or more inorganic fillers having different volume average particle sizes can be confirmed by measuring the particle size distribution of the inorganic filler by a method as described below. For example, the particle size distribution of the inorganic filler can be actually measured by laser diffractometry or by observing a section of the resin layer. In a case of laser diffractometry, the particle size distribution can be measured by extracting the inorganic filler in the resin layer and measuring the same with a laser diffraction scattering particle size distribution measuring apparatus (e.g., LS230, manufactured by Beckman Coulter, Inc.). Specifically, an inorganic filler component is extracted from the resin layer with an organic solvent, nitric acid, aqua regia or the like. Subsequently, the inorganic filler that has been extracted is thoroughly dispersed with an ultrasonic wave disperser or the like. Then, the particle size distribution of the inorganic filler can be measured by measuring the particle size distribution of the dispersion.

The particle size distribution may also be measured by observing and actually measuring a section of a resin layer, a multilayer resin sheet, or a cured product thereof, with a scanning electron microscope. Specifically, the resin layer, the multilayer resin sheet, or the cured product thereof is embedded in a transparent epoxy resin or the like, and the epoxy resin is polished with a polisher, a slurry or the like to expose a section of the inorganic filler. The particle size distribution of the inorganic filler can be measured by directly observing the exposed section with a scanning electron microscope. The measurement may be carried out by performing two-dimensional cross-section observation with an FIB apparatus (focused ion beam SEM) or the like in a continuous manner, and carrying out three-dimensional structure analysis.

The content of the inorganic filler in the resin layer ranges from 80 mass% to 93 mass% when the total mass of the solid content of the resin layer is 100 mass%. The content of the inorganic filler is preferably from 83 mass% to 93 mass%, more preferably from 85 mass% to 93 mass%, when the total mass of the solid content of the resin layer is 100 mass%. When the content of the inorganic filler is less than 80 mass%, it may not be possible to achieve a sufficient thermal conductivity. When the content of the inorganic filler is greater than 93 mass%, flexibility and insulation properties of the resin sheet may deteriorate.

From the viewpoint of thermal conductivity, insulation properties and flexibility, the resin layer preferably includes an epoxy resin having a mesogenic group in an amount of from 1 mass% to 20 mass% in a solid content as the first epoxy resin; at least one curing agent selected from an amine-based curing agent and a phenol-based curing agent such that the ratio of the first epoxy resin to the curing agent is from 0.85 to 1.2 based on the epoxy equivalent; and an inorganic filler having a particle size distribution curve with two or more peaks and a thermal conductivity of 30 W/mK or more in an amount of from 83 mass% to 95 mass% in the solid content.
More preferably, the resin layer includes an epoxy resin having a mesogenic group that has an asymmetric structure in a planar structure thereof as the first epoxy resin in an amount of from 5 mass% to 15 mass% in the solid content; a phenol-based curing agent such that the ratio of the first epoxy resin to the curing agent is from 0.9 to 1.1 based on the epoxy equivalent; and an inorganic filler having a particle size distribution curve with two or more peaks and a thermal conductivity of 200 W/mK or more in an amount of from 85 mass% to 93 mass% in the solid content.

The resin layer may include other additives such as a coupling agent or a dispersing agent as necessary, in addition to the first epoxy resin, the curing agent and the inorganic filler. By including at least one of a coupling agent or a dispersing agent, thermal conductivity and insulation reliability are improved. The reason is thought to be, for example, that a coupling agent or a dispersing agent functions to form a covalent bond between a surface of the inorganic filler and an organic resin around the inorganic filler, thereby enabling efficient transfer of heat. Furthermore, it is thought that infiltration of water is suppressed, and insulation reliability is improved.

Examples of the coupling agent include silane coupling agents, titanate-based coupling agents, aluminate-based coupling agents, and dispersing agents. From the viewpoint of thermal conductivity and insulation reliability, at least one silane coupling agent is preferred.
A silane coupling agent can be appropriately selected from those commonly used. In particular, a silane coupling agent having a functional group selected from an epoxy group, an amino group, a mercapto group, a ureido group, a hydroxy group and the like at its end is preferred. By using a silane coupling agent as described above, compatibility with respect to an epoxy resin or a phenol resin and a loss of thermal conduction at an interface between a resin layer and an inorganic filler layer can be reduced.

Specific examples of the silane coupling agent include 3-glycidoxypropyltrimethoxysilane, 3-glycidoxypropyltriethoxysilane, 3-glycidoxypropylmethyldiethoxysilane, 3-glycidoxypropylmethyldimethoxysilane, 2-(3,4-epoxycyclohexyl)ethyltrimethoxysilane, 3-aminopropyltriethoxysilane, 3-(2-aminoethyl)aminopropyltrimethoxysilane, 3-(2-aminoethyl)aminopropyltrimethoxysilane, 3-aminopropyltrimethoxysilane, 3-phenylaminopropyltrimethoxysilane, 3-mercaptopropyltrimethoxysilane, 3-mercaptotriethoxysilane, and 3-ureidopropyltriethoxysilane. A silane coupling agent oligomer represented by SC-6000KS2 (manufactured by Hitachi Chemical Coated Sand Co., Ltd.) may also be used. The silane coupling agent may be used singly or as a combination of two or more kinds.

The dispersing agent can be appropriately selected from those commonly used. Examples of the dispersing agent include ED-113 (manufactured by Kusumoto Chemicals, Ltd.), DISPERBYK-106 (manufactured by BYK-Chemie GmbH) and DISPERBYK-111 (manufactured by BYK-Chemie GmbH). The dispersing agent may be used singly or as a combination of two or more kinds.

When the resin layer includes a coupling agent or a dispersing agent, the content of the coupling agent and the dispersing agent in the resin layer is not specifically restricted. From the viewpoint of thermal conductivity, the content of the coupling agent and the dispersing agent with respect to the inorganic filler is preferably from 0.01 mass% to 2 mass%, more preferably from 0.1 mass% to 1 mass%.

### -Curing Accelerator-

The resin layer preferably further includes at least one curing accelerator. Examples of the curing accelerator include quaternary phosphonium salt-based compounds, quaternary ammonium salt-based compounds, imidazole-based compounds, DBU fatty acid salt-based compounds, metal chelate-based compounds, metal salt-based compounds, and triphenylphosphine-based compounds.

Examples of the curing accelerator that is an imidazole-based compound include 2-methylimidazole, 2-ethyl-4-methylimidazole, 1-cyanoethyl-2-phenylimidazole, and 1-cyanoethyl-2-phenylimidazolium trimellitate. Examples of commercially available products include CUREZOL 2E4MZ, CUREZOL 2PZ-CN and CUREZOL 2PZ-CNS, trade names, manufactured by Shikoku Chemicals Corporation.

Examples of the curing accelerator that is a triphenylphosphine-based compound include triphenylphosphine.

A latent curing accelerator is also suitably used as the curing agent accelerator, in view of a long usable time of a resin sheet included in an adhesive layer. Representative examples thereof include dihydrazide compounds such as dicyandimide and adipic acid dihydrazide, guanamine acid, melamine acid, addition compounds of an epoxy compound and an imidazole compound, addition compounds of an epoxy compound and a dialkyl amine, addition compounds of amine and thiourea, and addition compounds of amine and isocyanate. However, the present invention is not limited to these compounds.

When the resin layer includes a curing accelerator, the content of the curing accelerator is preferably from 0.1 parts by mass to 20 parts by mass, more preferably from 0.5 parts by mass to 15 parts by mass, with respect to 100 parts by mass of the total of the epoxy resin and the curing agent. When the content of the curing accelerator is 0.1 parts by mass or more, a sufficient curing rate tends to be obtained. When the content of the curing accelerator is 20 parts by mass or less, a sufficient usable time tends to maintained.

A resin layer (hereinafter, also referred to as a "resin sheet") can be formed by, for example, forming a coating layer on a releasing film by applying a resin composition that includes a first epoxy resin, a curing agent, an inorganic filler and optional components such as a solvent or an additive, and drying the same. Specifically, for example, the resin layer can be formed by forming a layer on a releasing film such as a PET film by applying a resin composition that has been prepared as a varnish by adding a solvent such as methyl ethyl ketone or cyclohexanone with an applicator, and drying the same to remove at least a part of the solvent.

The resin layer may be made into a semicured B-stage by heat-curing or photo-curing. The B stage state refers to a state in which the viscosity of the resin layer is 10⁴ to 10⁵ Pa·s s at an ordinary temperature (25°C) and decreases to 10² to 10³ Pa·s at 100°C. The conditions for heat-curing or photo-curing are not specifically restricted as long as the resin layer can be made into a B stage state. For example, heat pressing can be used for the heat-curing. In that case, a flat resin layer can be formed. Specific examples of the method for obtaining a resin layer in a B stage state by heat-curing include a method of performing heat pressing at from 80°C to 170°C and a pressure of from 0.1 MPa to 20 MPa for from 0.1 minutes to 5 minutes.

In the present invention, the average thickness of the resin layer is preferably from 50 µm to 500 µm, and the thickness can be appropriately selected from the range depending on purposes without particular limitation. The average thickness of the resin layer is more preferably from 70 µm to 300 µm, further preferably from 100 µm to 250 µm, from the viewpoint of thermal conductivity and insulation properties. In general, as the thickness of the resin layer decreases, thermal conductivity tends to improve, whereas insulation properties tend to deteriorate. When the average thickness of the resin layer is 50 µm or more, insulation properties tend to be sufficient. When the average thickness of the resin layer is in a range of from 50 µm to 100 µm, in which insulation properties are secured and thermal conductivity is favorable, the resin layer is adequately usable in the fields in which thermal conductivity is important. In the range of from 100 µm to 250 µm, the balance between thermal conductivity and insulation properties is most suitable. In the range of from 250 µm to 500 µm, although thermal conductivity is slightly inferior, insulation properties are improved. Therefore, the resin layer is adequately usable in the fields in which insulation properties are important. When the average thickness is 500 µm or less, productivity tends to improve while preventing thermal conductivity from becoming too low. The average thickness of the resin layer is given as an arithmetic mean value of thicknesses measured at five points of the resin layer by cross-section observation. The method of the cross-section observation is not specifically restricted as long as the average thickness of the resin layer can be measured. For example, the measurement can be carried out with a scanning electron microscope (SEM) under conditions that are appropriately selected according to the type of the resin. The average thickness of the resin layer included in the multilayer resin sheet is measured in a similar manner.

The density of the resin layer may be appropriately selected according to the constitution, the amount or the like of an inorganic filler. For example, the density is preferably within a range of from 1.8 g/cm³ to 3.3 g/cm³. Specifically, when aluminum oxide is used as an inorganic filler, a range of from 2.0 g/cm³ to 3.3 g/cm³ is preferred. From the viewpoint of achieving both flexibility and thermal conductivity of the resin layer, a range of from 2.2 g/cm³ to 3.3 g/cm³ is more preferred, a range of from 2.5 g/cm³ to 3.3 g/cm³ is further preferred, and a range of from 3.1 g/cm³ to 3.3 g/cm³ is particularly preferred. The densities of the resin layer and the multilayer resin sheet can be measured by an Archimedes method.

### [Adhesive Layer]

The multilayer resin sheet has, on at least one surface of the resin layer, an adhesive layer that includes a second epoxy resin and an inorganic filler, and the content of the inorganic filler is from 30 mass% to 80 mass%. The adhesive layer may include other components such as a high molecular weight component, in addition to the second epoxy resin and the inorganic filler.
By having a constitution as described above, flexibility of the multilayer resin sheet is improved and cracking of the resin layer is suppressed. Further, in a case in which an extremely strong stress or impact is applied to the multilayer resin sheet, the adhesive layer is cracked together with the resin layer. Therefore, it is easy to distinguish a defective product from others. The reason for this is thought to be the following, for example.
In addition, the average thickness of the adhesive layer is not specifically restricted. The average thickness is preferably from 1 µm to 25 µm, from the viewpoint of thermal conductivity and insulation properties.

The adhesive layer in which the content of the inorganic filler is within the specified range is disposed on one surface or both surfaces of the resin layer. It is thought that brittleness of the resins layer is sufficiently improved and oversight of defective products is avoided by providing an adhesive layer on a surface of the resin layer, which is most prone to receive a stress when the multilayer resin sheet is bent or the like and most prone to formation of a starting point of a crack. Consequently, it becomes possible for the first time to constitute a multilayer resin sheet that exhibits excellent thermal conductivity, flexibility and adhesion, by providing an adhesive layer having a specified constitution on a resin layer.

The adhesive layer preferably has electrical insulation properties. The insulation properties refer to that a dielectric voltage is 3 kV or more. In the present invention, the adhesive layer is disposed on at least one surface of the resin layer, but the adhesive layer is preferably disposed on both surfaces of the resin layer from the viewpoint of improvement in insulation properties and initial adhesion tolerance.

### (Second Epoxy Resin)

The adhesive layer includes at least one second epoxy resin (prepolymer). The second epoxy resin is not specifically restricted as long as it cures upon application of heat and exhibits adhesiveness. In particular, the second epoxy resin has a structure that is different from the first epoxy resin included in the resin layer, and is preferably a bi- or higher-functional epoxy resin that contains two or more epoxy groups in one molecule.

Examples of the bifunctional epoxy resin containing two epoxy groups in one molecule include bisphenol A epoxy resins and bisphenol F epoxy resins. Examples of commercially available products of bisphenol A epoxy resins and bisphenol F epoxy resins include EPIKOTE 807, EPIKOTE 827 and EPIKOTE 828, trade names, manufactured by Mitsubishi Chemical Corporation; D.E.R. 330, D.E.R. 331 and D.E.R. 361, trade names, manufactured by Dow Chemical Japan Limited; and YD8125 and YDF8170, trade names, manufactured by Tohto Kasei Co., Ltd.

In addition, examples of tri- or higher-functional epoxy resins that contains three or more epoxy groups in one molecule include phenol novolac epoxy resins and cresol novolac epoxy resins. Examples of commercially available products of phenol novolac epoxy resin include EPPN-201, trade name, manufactured by Nippon Kayaku Co., Ltd. Examples of commercially available products of cresol novolac epoxy resin include ESCN-190 and ESCN-195, trade names, manufactured by Sumitomo Chemical Company, Limited; EOCN1012, EOCN1025 and EOCN1027, trade names, manufactured by Nippon Kayaku Co., Ltd.; and YDCN 701, YDCN 702, YDCN 703 and YDCN 704, trade names, manufactured by Tohto Kasei Co., Ltd.

The weight average molecular weight of the second epoxy resin is preferably 300 or more and less than 5000, more preferably 300 or more and less than 3000, from the viewpoint of flexibility of the multilayer resin sheet. The weight average molecular weight is a value that is measured by gel permeation chromatography and converted with a calibration curve based on standard polystyrene.

When a bifunctional epoxy resin and a tri- or higher-functional epoxy resin are used in combination as the second epoxy resins included in the adhesive layer, from the viewpoint of heat resistance, it is preferred to use from 50 parts by mass to 99 parts by mass of the bifunctional epoxy resin and from 1 part by mass to 50 parts by mass of the tri- or higher-functional epoxy resin, more preferably from 50 parts by mass to 90 parts by mass of the second epoxy resin and from 10 parts by mass to 50 parts by mass of the tri- or higher-functional epoxy resin, based on 100 parts by mass of the total of the bifunctional epoxy resin and a tri- or higher-functional epoxy resin.

The content of the second epoxy resin in the adhesive layer is not specifically restricted, as long as the adhesive layer can bond the resin layer to an adherend. For example, the content is preferably from 0.1 mass% to 30 mass%, more preferably from 5 mass% to 20 mass%, in the total mass of the solid content of the adhesive layer.

### (Inorganic Filler)

The adhesive layer includes at least one inorganic filler. The inorganic filler is not specifically restricted as long as the filler has thermal conductivity. In particular, the inorganic filler is preferably a nonconductive inorganic filler. Examples of the nonconductive inorganic filler include aluminum oxide, magnesium oxide, aluminum nitride, boron nitride (such as hexagonal boron nitride or cubic boron nitride), silicon nitride, silicon oxide, aluminum hydroxide, barium sulfate and diamond. In particular, at least one selected from the group consisting of aluminum oxide, boron nitride, magnesium oxide and aluminum nitride is more preferred from the viewpoint of thermal conductivity and insulation properties. These inorganic fillers may be used singly or as a combination of two or more kinds.
By using a nonconductive filler as the inorganic filler, it is possible to constitute a multilayer resin sheet that is more improved in insulation properties.

The volume average particle size of the inorganic filler included in the adhesive layer is not specifically restricted. For example, the volume average particle size may be from 0.1 µm to 5.0 µm. From the viewpoint of flexibility and thermal conductivity, the volume average size is preferably from 0.3 µm to 3.0 µm.

The content of the inorganic filler in the adhesive layer is from 30 mass% to 80 mass%, when the total mass of the solid content of the adhesive layer is 100 mass%. In particular, the content of the inorganic filler is preferably from 45 mass% to 80 mass%, more preferably from 60 mass% to 78 mass%, from the viewpoint of adhesion and resistance to a thermal shock. The inventors have found that the thermal conductivity of the adhesive layer is similar to the thermal conductivity of a resin alone when the content of the inorganic filler is less than 30 mass%. Accordingly, when the adhesive layer is used for the multilayer resin sheet, there are cases in which thermal conductivity decreases, although a sufficient adhesion is ensured.

When the content of the inorganic filler is 30 mass% or more and less than 45 mass%, it is possible to confirm whether or not the adhesive layer is imparted with thermal conductivity by the inorganic filler, and whether or not thermal conductivity of the multilayer resin sheet is improved. Further, when the content of the inorganic filler is 45 mass% or more and less than 78 mass%, thermal conductivity of the adhesive layer is further improved, and heat is efficiently transferred in the multilayer resin sheet without deteriorating thermal conductivity of the resin layer, and sufficient adhesion can be secured. In particular, in the range of 60 mass% or more and less than 78 mass%, a balance of thermal conductivity, adhesion or the like is most suitable.

On the other hand, when the content of the inorganic filler is more than 80 mass%, thermal conductivity of the adhesive layer in itself is increased. However, since a resin component in the sheet becomes insufficient, adhesion may deteriorate. As a result, functions as the adhesive layer may be lowered. Further, since the elasticity modulus of the adhesive layer is increased, shock resistance may also deteriorate, thereby affecting productivity.

### (Other Components)

The adhesive layer may include other components such as a high molecular weight component, a curing agent, a curing accelerator, a coupling agent and an ion trapping agent, as necessary.

### -High Molecular Weight Component-

The adhesive layer preferably includes at least one high molecular weight component, more preferably at least one high molecular weight component having a weight average molecular weight of 10000 or more and a glass transition temperature of 50°C or less. By including a high molecular weight component in addition to the second epoxy resin, it is possible to improve adhesive strength and a tolerance with respect to initial adhesion.

The weight average molecular weight of the high molecular weight component is preferably 10000 or more, more preferably 100000 or more. When the weight average molecular weight is 10000 or more, strength or flexibility of the resin composition may further improve, or tackiness thereof may decrease, when the resin composition is made into a film. The weight average molecular weight of the high molecular weight component is preferably 2000000 or less, more preferably 1000000 or less, further preferably 400000 or less. When the weight average molecular weight is 2000000 or less, a decrease in flowability of the resin composition for forming the adhesive layer tends to be suppressed, and packing efficiency in wiring circuits tends to improve, for example. The weight average molecular weight is a value measured by gel permeation chromatography and converted with a standard polystyrene calibration curve.

In addition, the glass transition temperature (Tg) of the high molecular weight component is preferably 50°C or less, more preferably from -50°C to 50°C, further preferably from -50°C to 0°C, particularly preferably from -30°C to -5°C, from the viewpoint of flexibility of the multilayer resin sheet. When the glass transition temperature is 50°C or less, flexibility of the multilayer resin sheet is further improved, and rupture of the multilayer resin sheet during handling the same at room temperature can be suppressed. When the glass transition temperature is -50°C or more, an increase in tackiness of the adhesive layer is suppressed, and handleability tends to be improved.

The high molecular weight component is preferably a high molecular weight component having a functional group, from the viewpoint of promoting a crosslinking reaction. The functional group may exist in a polymer chain or at an end of a polymer chain. Examples of the functional group include crosslinkable functional groups such as an epoxy group, a carboxyl group, a hydroxy group, an acryloyl group, a methacryloyl group, an isocyanate group, an amino group and an amide group. Among these functional groups, an epoxy group is preferred.

Examples of the high molecular weight component having a functional group include, but not limited to, polyimide resins, (meth)acrylic resins, urethane resins, polyphenylene ether resins, polyetherimide resins, phenoxy resins, modified polyphenylene ether resins, high molecular weight epoxy resins, and ultrahigh molecular weight epoxy resins, having a crosslinkable functional group.

The amount of a monomer having a functional group that constitutes the high molecular weight component is preferably from 0.5 mass% to 6.0 mass%, more preferably from 1.0 mass% to 4.0 mass%, based on the total amount of the monomers. When the amount of the monomer having a functional group is 0.5 mass or more, heat resistance tends to improve. When the amount of the monomer having a functional group is 6.0 mass% or less, an increase in viscosity of a composition for forming an adhesive layer (hereinafter, also referred to as a "varnish") tends to be suppressed. By suppressing an increase in viscosity of the varnish, formation of a film becomes easy. Further, since the composition need not be diluted with a suitable amount of a solvent or the like in order to lower the viscosity, the amount of preparation of a varnish is suppressed, and production efficiency is further improved.

The high molecular weight component having a functional group can be produced by, for example, homopolymerization of a polymerizable monomer having a desired functional group, or copolymerization of a polymerizable monomer having a functional group with another polymerizable monomer that is copolymerizable with a polymerizable monomer having a functional group. The method for polymerization is not specifically restricted, and may be a method such as pearl polymerization or solution polymerization.

Specific examples of preferred high molecular weight components include an epoxy group-containing (meth)acryl copolymer having a weight average molecular weight of 100000 or more, which is obtained by polymerizing a monomer composition containing a functional group-containing monomer such as glycidyl acrylate or glycidyl methacrylate. Examples of the epoxy group-containing (meth)acryl copolymer include a (meth)acrylic acid ester copolymer and an acrylic rubber, and an acrylic rubber is more preferred.

The acrylic rubber is a rubber that includes a (meth)acrylic acid ester copolymer as a main component, which is mainly formed from a copolymer of butyl acrylate and acrylonitrile or the like, a copolymer of ethyl acrylate and acrylonitrile or the like, and the like.

The high molecular weight component is preferably a high molecular weight component that has a Tg of -50°C to 50°C, a crosslinkable functional group, and a weight average molecular weight of from 100000 to 400000. When the high molecular weight component has a Tg of 50°C or less, flexibility of the multilayer resin sheet is more improved. When the Tg is -50°C or more, an increase in tackiness of the multilayer resin sheet is suppressed, and handleability thereof is more improved. In addition, when the weight average molecular weight of the high molecular weight component is 100000 or more, heat resistance of the resin sheet is more improved. When the weight average molecular weight is 400000 or less, flowability of the resin sheet is further improved. A commercially available product of a high molecular weight component having the properties set forth above include HTR-860P-3, trade name, manufactured by Nagase ChemteX Corporation.

When an adhesive layer includes a high molecular weight component, the content of the high molecular weight component in the adhesive layer is preferably from 10 parts by mass to 500 parts by mass, more preferably from 10 parts by mass to 400 parts by mass, particularly preferably from 40 parts by mass to 80 parts by mass, with respect to 100 parts by mass of the total of an epoxy resin and a curing agent described below. When the content of the high molecular weight component is 10 parts by mass or more, an elasticity modulus is further reduced and flowability during molding is further improved. In addition, when the content of the high molecular weight component is 500 parts by mass or less, a decrease in flowability upon application of insufficient load can be suppressed, and a decrease in circuit filling efficiency can be suppressed.

### -Curing Agent-

The adhesive layer preferably further includes at least one curing agent. The curing agent included in the adhesive layer is not specifically restricted as long as it is a commonly used curing agent for an epoxy resin. Examples of the curing agent include amines, polyamides, acid anhydrides, polysulfides, boron trifluoride, bisphenols such as bisphenol A, bisphenol F and bisphenol S, which are compounds having two or more phenolic hydroxy groups in one molecule, phenol resins such as phenol novolac resins, modified phenol novolac resins, bisphenol A novolac resins, and cresol novolac resins. In particular, phenol resins such as phenol novolac resins, bisphenol novolac resins and cresol novolac resins are preferred from the viewpoint of an excellent migration resistance when moisture is absorbed.

Examples of commercially available products of phenol resins that may be used as a curing agent include BURCUM TD-2090, BURCUM TD-2131, PLYOPHEN LF 2882, PLYOPHEN VH 4150, PLYOPHEN VH 4170, PHENOLITE LF 2882 and PHENOLITE LF 2822, trade names, manufactured by DIC Corporation; and MILEX XLC Series and XL series, trade names, manufactured by Mitsui Chemicals, Inc.

The weight average molecular weight of the phenol resin is not specifically restricted. The weight average molecular weight is preferably from 300 to 2000, more preferably from 500 to 1500, from the viewpoint of adhesion and heat resistance.

When the adhesive layer includes a curing agent, the content of the curing agent in the adhesive layer is adjusted such that the total amount of reaction active groups in the curing agent is preferably from 0.6 equivalents to 1.4 equivalents, more preferably from 0.8 equivalents to 1.2 equivalents, with respect to 1 epoxy group equivalent of a second epoxy resin. When the content of the curing agent is within the range, heat resistance tends to further improve.

### -Curing Accelerator-

The adhesive layer preferably further includes at least one curing accelerator. Examples of the curing accelerator include quaternary phosphonium salt-based compounds, quaternary ammonium salt-based compounds, imidazole-based compounds, DBU fatty acid salt-based compounds, metal chelate-based compounds, metal salt-based compounds and triphenylphosphine-based compounds.
Examples of the imidazole-based compound as the curing accelerator include 2-methylimidazole, 2-ethyl-4-methylimidazole, 1-cyanoethyl-2-phenylimidazole and 1-cyanoethyl-2-phenylimidazoliumtrimellitate. Commercially available products include CUREZOL 2E4MZ, CUREZOL 2PZ-CN and CUREZOL 2PZ-CNS, trade names, manufactured by Shikoku Chemicals Corporation.

A latent curing accelerator is also preferably used as the curing agent accelerator in view of a longer useful life of a resin sheet included in an adhesive layer. Representative examples thereof include dihydrazide compounds such as dicyandimide and adipic acid dihydrazide, guanamine acid, melamine acid, addition compounds of an epoxy compound and an imidazole compound, addition compounds of an epoxy compound and a dialkyl amine, addition compounds of an amine and a thiourea, and addition compounds of an amine and an isocyanate. However, the present invention is not limited to these compounds.

In particular, a curing accelerator having an adduct type structure is preferred in view of suppressing activity at room temperature. Representative examples of the adduct type curing accelerator are described below, but the present invention is not limited thereto. Examples of commercially available products of amine-epoxy adduct type curing accelerators include AJICURE PN-23, AJICURE MY-24, AJICURE MY-D and AJICURE MY-H, trade names, manufactured by Ajinomoto Co., Inc.; HARDENER X-3615S and HARDENER X-3293S, trade names, manufactured by ACR Co., Ltd.; NOVACURE HX-3748 and NOVACURE HX-3088, trade names, manufactured by Asahi Kasei Corp.; and ANCAMINE 2014 AS and ANCAMINE 2014 FG, trade names, manufactured by Pacific Anchor Chemical Corporation. Examples of commercially available products of amine-urea adduct type curing accelerators include FUJICURE FXE-1000 and FUJICURE FXR-1030, trade names, manufactured by Fuji Kasei Co., Ltd.

When the adhesive layer includes a curing accelerator, the content of the curing accelerator in the adhesive layer is preferably 0.1 parts by mass to 20 parts by mass, more preferably 0.5 parts by mass to 15 parts by mass, based on 100 parts by mass in total of the epoxy resin and the curing agent. When the content of the curing accelerator is not less than 0.1 parts by mass, a sufficient curing rate tends to be obtained. In addition, in the case of not more than 20 parts by mass, shortening of the useful life tends to be suppressed.

### (Coupling Agent)

The adhesive layer may include at least one coupling agent. By including a coupling agent, interfacial bonding between materials that are different from each other is improved, and thermal conductivity is further improved. Examples of the coupling agent include silane coupling agents, titanate coupling agents and aluminum coupling agents. Among them, silane coupling agents are preferred from the viewpoint of thermal conductivity.

When the adhesive layer includes a silane coupling agent, the content of the coupling agent in the adhesive layer is preferably from 0.1 parts by mass to 10 parts by mass with respect to 100 parts by mass of the total solid content of the adhesive layer, in view of an effect achieved by adding a silane coupling agent, heat resistance and economic efficiency. Specific examples of the silane coupling agent are as described above.

### (Ion Trapping Agent)

The adhesive layer may include at least one ion trapping agent. By including an ion trapping agent, ionic impurities are adsorbed thereto and insulation reliability when moisture is absorbed is further improved. When the adhesive layer includes an ion trapping agent, the content of the ion trapping agent is preferably from 1 part by mass to 10 parts by mass with respect to 100 parts by mass of the total solid content of the adhesive layer, in view of an effect achieved by adding an ion trapping agent, heat resistance and economic efficiency.

Examples of the ion trapping agent include compounds that are known as a copper inhibitor that prevents elution of copper ions, such as triazine thiol compounds, bisphenol reductants and inorganic ion adsorbents. A copper inhibitor that includes a triazine thiol compound as a component is commercially available as ZISNET DB (trade name), manufactured by Sankyo Pharmaceutical Co., Ltd. Examples of the bisphenol reductants include 2,2'-methylene-bis-(4-methyl-6-tert-butylphenol), 4,4'-thio-bis-(3-methyl-6-tert-butylphenol). Commercially available products include YOSHINOX BB (trade name), manufactured by Yoshitomi Pharmaceutical Industries, Ltd. Examples of the inorganic ion adsorbent include zirconium compounds, antimony-bismuth compounds and magnesium-aluminum compounds. Commercially available products include IXE (trade name), manufactured by Toagosei Chemical Industry Co., Ltd.

The adhesive layer resin composition preferably has, when it is formed from components except the inorganic filler and cured, a storage elastic modulus at 25°C as measured by a dynamic viscoelasticity measuring apparatus of from 20 MPa to 2000 MPa, more preferably from 100 MPa to 2000 MPa, and a storage elastic modulus at 260°C of preferably from 3 MPa to 50 MPa, more preferably from 3 MPa to 40 MPa, particularly preferably from 3 MPa to 20 MPa.

When the cured product of the adhesive layer resin composition has a storage elastic modulus at 25°C of 2000 MPa or less or a storage elastic modulus at 260°C of 50 MPa or less, it tends to be possible to sufficiently release a thermal stress generated by a difference in the thermal expansion coefficient of a metal plate or a radiator plate and the thermal expansion coefficient of the multilayer resin sheet, thereby suppressing occurrence of peeling or cracking. Further, when the storage elastic modulus at 25°C is 20 MPa or more, handleability of the multilayer resin sheet and accuracy in the thickness thereof tend to be improved. Moreover, when the storage elastic modulus at 260°C is 3 MPa or more, occurrence of cracking at high temperature tends to be suppressed.

The cured product of the adhesive layer resin composition is obtained by, for example, heating an adhesive layer resin composition at from 130°C to 200°C for from 0.5 hours to 5 hours. The storage elastic modulus can be measured by, for example, applying a tensile load to the cured product and measuring in a temperature-dependency measuring mode in a range of from -50°C to 300°C at a temperature raising rate of from 5 to 10°C/minute and at a frequency of 10 Hz, with a dynamic viscoelasticity measuring apparatus (DVE-V4, manufactured by Rheology Co., Ltd.)

In the present invention, the average thickness of the adhesive layer is preferably from 1 µm to 25 µm, and can be appropriately selected within the range depending on purposes without particular limitation. The average thickness of the adhesive layer is more preferably from 2 µm to 15 µm, further preferably 5 µm to 12 µm, from the viewpoint of thermal conductivity and insulation properties. When the average thickness of the adhesive layer is 1 µm or more, a sufficient adhesion tends to achieved. When the average thickness of the adhesive layer is 25 µm or less, an excessive decrease in thermal conductivity tends to be suppressed. The average thickness of the adhesive layer is given as an arithmetic mean value of thicknesses measured by cross-section observation at five points of the adhesive layer. The method of the cross-section observation is not specifically restricted as long as the average thickness of the adhesive layer can be measured. For example, the measurement can be conducted with a scanning electron microscope (SEM) under conditions that are appropriately selected depending on the type of a resin. The average thickness of the adhesive layer in the multilayer resin sheet is measured in a similar manner.

The adhesive layer can be formed by, for example, forming a coating layer on a releasing film by applying an adhesive layer resin composition that includes a second epoxy resin, an inorganic filler, and optionally other components such as a solvent, and drying the same. Specifically, an adhesive layer in the form of a sheet can be formed by, for example, applying an adhesive layer resin composition, which has been prepared as a varnish by adding a solvent such as methyl ethyl ketone or cyclohexanone, to a releasing film such as a PET film with an applicator or the like, and then removing at least a part of the solvent and drying.

The adhesive layer is provided on at least one surface of the resin layer. Examples of the method of providing the adhesive layer on a surface of the resin layer include a method in which a resin layer and an adhesive layer that is in the form of a sheet are bonded by pressing or lamination; and a method in which an adhesive layer is directly formed on a surface of a resin layer by applying an adhesive layer resin composition to the resin layer surface and removing a solvent. From the viewpoint of workability and the like, a method in which an adhesive layer that has been previously made into a sheet is bonded to a surface of a resin layer is preferred.

The conditions for bonding an adhesive layer sheet to a surface of a resin layer by pressing or lamination are appropriately selected depending on the constitutions of the resin layer and the adhesive layer. For example, the adhesive layer can be provided on the resin layer under conditions of a heating temperature of from 130°C to 150°C, a pressure of from 1 MPa to 15 MPa, and a time of from 0.2 minutes to 3 minutes.

### [Method for Producing Multilayer Resin Sheet]

A method for producing a multilayer resin sheet includes, for example, a resin layer forming step in which a resin composition including an epoxy resin, a curing agent and an inorganic filler is formed into a sheet to obtain a resin layer; and an adhesive layer forming step in which an adhesive layer is disposed on at least one surface of the resin layer. As necessary, the method includes other steps.
Details of the resin layer forming step and the adhesive layer forming step are as described above, and preferred embodiments are also the same.

### <Multilayer Resin Sheet with Metal Foil>

The multilayer resin sheet with a metal foil according to the present invention includes the multilayer resin sheet and a metal foil that is disposed on at least one adhesive layer of the multilayer resin sheet. By including the multilayer resin sheet, excellent thermal conductivity, electrical insulation properties and flexibility are achieved. The multilayer resin sheet is preferably a semi-cured resin layer in which the resin layer is a semi-cured product in a B stage state.

The metal foil may be disposed on at least one adhesive layer of the multilayer resin sheet. That is, when the multilayer resin sheet has adhesive layers on both surfaces thereof, the metal foil may be disposed on both adhesive layers, or on either one of the adhesive layers.

The metal foil is not specifically restricted and may be a gold foil, a copper foil, an aluminum foil or the like. Generally, a copper foil is used. The thickness of the metal foil is not specifically restricted as long as the thickness is from 1 µm to 35 µm. When the metal foil has a thickness of 20 µm or less, flexibility is further improved. It is also possible to use a three-layer composite foil including an intermediate layer of nickel, nickel-phosphorus, nickel-tin alloy, nickel-iron alloy, lead, lead-tin alloy or the like, and a copper layer of 0.5 µm to 15 µm and a copper layer of 10 µm to 300 µm that are disposed on both surfaces of the intermediate layer; and a two-layer composite foil in which aluminum and copper foils are combined.

The multilayer resin sheet with a metal foil is obtained by positioning the metal foil on at least one adhesive layer of the multilayer resin sheet. Examples of the method for positioning a metal foil on an adhesive layer include a method of bonding a metal foil to an adhesive layer of the multilayer resin sheet by pressing or lamination; and a method of positioning, on at least one surface of the resin layer, an adhesive layer and a metal foil in this order, and bonding the layers by pressing or lamination. In view of workability and the like, a method of bonding a metal foil to an adhesive layer of the multilayer resin sheet by pressing or lamination; and a method of positioning, on at least one surface of the resin layer, an adhesive layer and a metal foil in this order, and bonding the layers by pressing or lamination.

The conditions for pressing or lamination for obtaining the multilayer resin sheet with a metal foil are appropriately selected depending on the constitutions of the resin layer and the adhesive layer, or the like. For example, the metal foil can be positioned on the adhesive layer of the multilayer resin sheet under the conditions of a heating temperature of from 130°C to 150°C, a pressure of from 1 MPa to 15 MPa, and a time from 0.2 minutes to 3 minutes.

### <Cured Multilayer Resin Sheet>

The cured multilayer resin sheet according to the present invention is a cured product of the multilayer resin sheet. The cured multilayer resin sheet can be produced by a method including a curing step in which light or heat is applied to the multilayer resin sheet to cure a resin layer that constitutes the multilayer resin sheet. As necessary, the method may include other steps.

Upon application of light or heat to the resin layer, a higher-order crosslinked structure including a crystal structure section and an amorphous structure section is formed by reaction of a resin that exhibits a higher-order structure (e.g., an epoxy resin having a mesogenic group) with a curing agent. In a case in which the adhesive layer is in contact with an adherend, the adherend can be bonded to the resin layer via the adhesive layer as the adhesive layer cures.
The resin layer includes an inorganic filler and the adhesive layer is disposed on the resin layer. Therefore, the cured multilayer resin sheet has a high thermal conductivity, favorable insulation properties and adhesive strength, and excellent resistance to a thermal shock. Thus, the cured multilayer resin sheet is suitable as an electrical insulation material for electrical or electronic instruments.

The resin layer is cured by use of light or heat. Examples of the method for applying light to cure the resin layer include UV light sources.

Examples of the method for applying heat to cure the resin layer include a method in which the heating temperature is set at from 100°C to 220°C and the heating time is set at from 30 minutes to 10 hours.
In the present invention, the method for curing the resin layer is preferably a heat treatment at a heating temperature that includes a temperature at which an epoxy resin having a mesogenic group is easily oriented, from the viewpoint of thermal conductivity. Specifically, from the viewpoint of achieving an even higher thermal conductivity, the heat treatment preferably includes at least two stages, i.e., heating at from 100°C to 160°C and heating at from 160°C to 250°C.

The average thickness of the resin layer in the multilayer resin sheet is preferably from 50 µm to 500 µm, which is an average thickness prior to curing. Accordingly, in the cured multilayer resin sheet, there are cases in which the average thickness of the resin layer decreases after curing, depending on the constitution of the resin layer or the curing conditions. Specifically, in a case in which boron nitride, which is soft and prone to squash, is included in the multilayer resin sheet, the thickness of the resin layer after curing may change from the average thickness of the resin layer by approximately from 5% to 40%. In contrast, in a case in which alumina, which is hard and difficult to deform, is included, the thickness of the resin layer after curing does not change significantly from the average thickness of the resin layer.

### <Resin Sheet Laminate>

The resin sheet laminate according to the present invention includes the cured multilayer resin sheet, which is a cured product of the multilayer resin sheet, and a metal plate or a radiator plate disposed on at least one surface of the cured multilayer resin sheet. The resin sheet laminate exhibits a high thermal conductivity, excellent adhesive strength between the adhesive layer and the metal plate or the radiator plate, and excellent resistance to a thermal shock.

Examples of the metal plate or the radiator plate include a copper plate, an aluminum plate, a ceramic plate or the like. The thickness of the metal plate or the radiator plate is not specifically restricted, and may be appropriately selected depending on purposes. As the metal plate or the radiator plate, a metal foil such as a copper foil or an aluminum foil may be used.

The resin sheet laminate can be produced by a production method including the steps of: positioning a metal plate or a radiator plate on at least one adhesive layer of the multilayer resin sheet including adhesive layers on both surfaces of a resin layer; and applying light or heat to the multilayer resin sheet to cure the resin layer.

The method for positioning the metal plate or the radiator plate on the adhesive layer of the multilayer resin sheet may be an ordinary method without particular limitation. Examples thereof include a method of attaching a metal plate or a radiator plate onto the adhesive layer. Methods for attaching include a pressing method and a lamination method.
The conditions for a pressing method or a lamination method are not specifically restricted, and may be appropriately selected depending on the constitution of the resin sheet laminate with high thermal conductivity.

Details of the method for curing the resin layer of the multilayer resin sheet are as described above, and preferred embodiments are also the same.

The multilayer resin sheet of the present invention can be applied to various purposes because of its excellent electrical insulation property, thermal conductivity and adhesion. For example, the multilayer resin sheet is suitably used in power semiconductor devices including thyristors and IGBTs; optical semiconductor devices including LED chips, and the like.

### <Semiconductor Device>

The semiconductor device according to the present invention includes the resin sheet laminate and a semiconductor element disposed on the resin sheet laminate. By including the resin sheet laminate, heat generated from the semiconductor element can be efficiently released via a metal plate or a radiator plate.

Examples of the semiconductor element include power semiconductor elements such as thyristors and IGBTs, optical semiconductor elements such as LED chips. The method for positioning the semiconductor element on the resin sheet laminate is not specifically restricted as long as the resin sheet laminate can conduct heat generated by the semiconductor element. For example, a substrate on which semiconductor elements are mounted may be positioned on the metal plate or the radiator plate of the resin child sheet laminate, or a metal plate of a metal substrate on which semiconductor element are mounted may be positioned, as the metal plate of the resin sheet laminate, on the adhesive layer of the multilayer resin sheet.

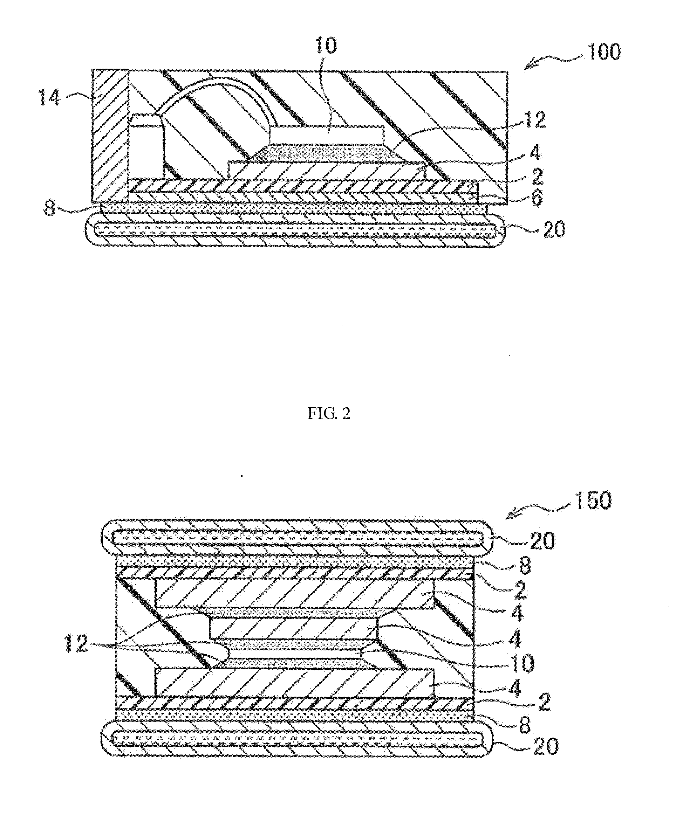

Examples of the power semiconductor device are illustrated in Fig. 1 to Fig. 3. Fig. 1 is a schematic cross-sectional view that illustrates an example of power semiconductor device 100 having a structure in which copper plate 4 on which power semiconductor chip 10 is placed via solder layer 12, multilayer resin sheet 2 according to the present invention, and heat radiation base 6 are positioned on water cooling jacket 20 via grease layer 8. Since a heat generator including power semiconductor chip 10 is in contact with a heat radiation member via the multilayer resin sheet according to the present invention, heat is released efficiently. Heat radiation base 6 may be formed from copper or aluminum that is thermally conductive.

Fig. 2 is a schematic cross-sectional view that illustrates an example of power semiconductor device 150 that has cooling members positioned on both surfaces of power semiconductor chip 10. In power semiconductor device 150, the cooling member placed on the upper surface of power semiconductor chip 10 includes two copper plates 4. Therefore, occurrence of chip cracking or solder cracking is suppressed more effectively. Although multilayer resin sheet 2 and water cooling jacket 20 are positioned via grease layer 8 in Fig. 2, multilayer resin sheet 2 and water cooling jacket 20 may be in direct contact with each other.

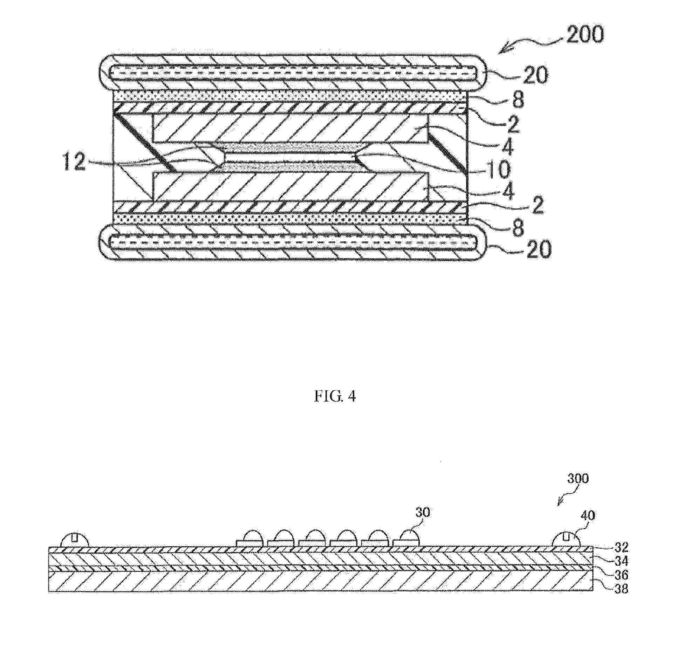

Fig. 3 is a schematic cross-sectional view that illustrates an example of power semiconductor device 200 having a structure in which cooling members are positioned on both surfaces of power semiconductor chip 10. In power semiconductor device 200, the cooling members positioned on both surfaces of power semiconductor chip 10 include one copper plate 4, respectively. Although multilayer resin sheet 2 and water cooling jacket 20 are placed via grease layer 8 in Fig. 3, multilayer resin sheet 2 and water cooling jacket 20 may be in direct contact with each other.

Fig. 4 is a schematic cross-sectional view that illustrates an example of LED light bar 300. LED light bar 300 has a structure in which housing 38, grease layer 36, aluminum substrate 34, multilayer resin sheet 32 according to the present invention, and LED chips 30 are positioned in this order. Since LED chips 30, which are heat generators, are positioned on aluminum substrate 34 via multilayer resin sheet 32 according to the present invention, heat can be released efficiently.

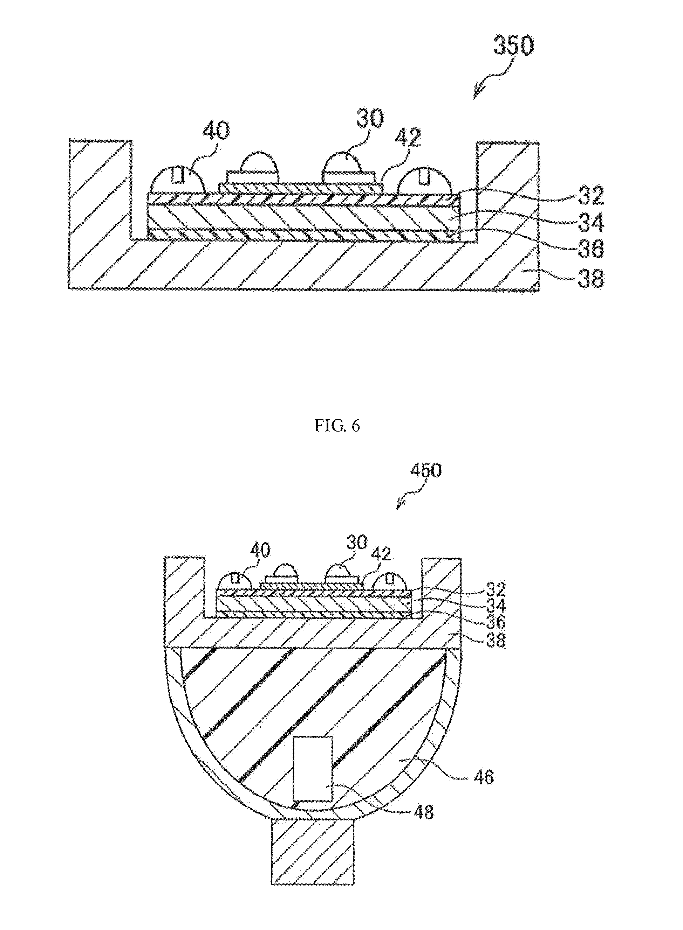

Fig. 5 is a schematic cross-sectional view that illustrates an example of light-emitting section 350 of an LED bulb. Light-emitting section 350 of the LED bulb has a structure in which housing 38, grease layer 36, aluminum substrate 34, multilayer resin sheet 32 according to the present invention, circuitry layer 42, and LED chips 30 are positioned in this order. Fig. 6 is a schematic cross-sectional view that illustrates an example of the whole constitution of LED bulb 450.

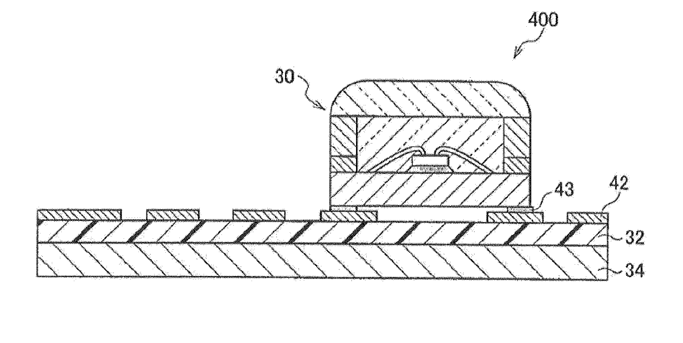

Fig. 7 is a schematic cross-sectional view that illustrates an example of LED substrate 400. LED substrate 400 has a structure in which aluminum substrate 34, multilayer resin sheet 32 according to the present invention, circuitry layer 42, and LED chip 30 are positioned in this order. Since LED chip 30, which is a heat generator, is positioned on aluminum substrate 34 via the circuitry layer and multilayer resin sheet 32 according to the present invention, heat can be released efficiently.

### EXAMPLES

In the following, the present invention will be specifically described with reference to the examples, but the present invention is not limited thereto. Unless otherwise specified, "part(s)" and "%" are based on mass.

### (Synthesis Example)

In a separable flask under a nitrogen atmosphere, 105 g (0.95 mol) of resorcinol and 5 g (0.05 mol) of catechol as monomers, 0.11 g (0.1 mass%) of oxalic acid as a catalyst, and 15 g of methanol as a solvent were measured and placed, and the mixture was stirred. While cooling the mixture in an oil bath such that the temperature was 40°C or below, 30 g (approximately 0.33 mol, F/P = 0.33) of formalin were added. After stirring for 2 hours, the temperature of the oil bath was raised to 100°C, and while heating, water and methanol were distilled away under reduced pressure. After confirming that distillation was completed, a solution in which the mass ratio of a novolac resin was 50% was prepared by adding CHN, thereby obtaining a catechol resorcinol novolac resin solution (CRN).
According to a molecular weight measurement by GPC, the obtained product had a number average molecular weight of 484 and the number of repeating units (n) was 3.9. The monomer content rate was 40%. According to a ¹H-NMR measurement, there were 2.1 hydroxy groups per repeating unit. The hydroxy equivalent weight was 62 g/eq.

### (Production of Resin Layer 1)

In a ball mill (crushing apparatus), 72.854 parts by mass of aluminum oxide [α-alumina, manufactured by Sumitomo Chemical Company, Limited; 48.082 parts by mass of aluminum oxide with a volume average particle size of 18 µm (AA-18), 17.484 parts by mass of aluminum oxide with a volume average particle size of 3 µm (AA-3), and 7.288 parts by mass of aluminum oxide with a volume average particle size of 0.4 µm (AA-04)] as an inorganic filler, 0.078 parts by mass of 3-phenylaminopropyltrimethoxysilane (KBM -573, manufactured by Shin-Etsu Chemical Co., Ltd.) as a silane coupling agent, 3.629 parts by mass of a catechol resorcinol novolac (CRN) resin (synthesized by above process, solid content: 50 mass%, dissolved in cyclohexanone) as a curing agent, 14.471 parts by mass of methyl ethyl ketone (MEK), 3.006 parts by mass of cyclohexanone (CHN), and 100 parts by mass of alumina balls (size: 5 mm) were mixed.

After confirming that the mixture was uniform, 5.902 parts by mass of 1-{(3-methyl-4-oxilanylmethoxy)phenyl}-4-(4-oxilanylmethoxyphenyl)-1-cyclohexene (first epoxy resin) and 0.061 parts by mass of triphenylphosphine (TPP, curing accelerator, manufactured by Wako Pure Chemical Industries, Ltd.) were further mixed and ball-milled for 40 hours to 60 hours, thereby obtaining a varnish-like resin composition (resin sheet coating liquid A). The first epoxy resin is an epoxy resin having a mesogenic group (epoxy resin with high thermal conductivity) synthesized according to the description of Japanese Patent Application Laid-Open (JP-A) No. 2005-206814.

The resin sheet coating liquid A (varnish-like resin composition) was applied onto a release surface of a polyethylene terephthalate film (75E-0010CTR-4, manufactured by Fujimori Kogyo Co., Ltd., hereinafter also simply referred to as a "PET film") to a thickness of approximately 100 µm with an applicator, and dried in a box type oven at 100°C for 10 minutes. Subsequently, two of the PET films each having a dried coating layer were layered such that upper surfaces that were exposed to air were in contact with each other, and subjected to vacuum heat pressing (hot plate: 130°C, pressure: 1 MPa, treatment time: 15 seconds). Thus, a resin layer in a B stage state having an average thickness of 200 µm and having PET films on both sides (resin layer 1) was obtained. The density of the resin layer from which the PET films had been removed as measured by an Archimedes method was 3.2 g/cm³.

### (Production of Resin Layer 2)

A varnish-like resin composition (resin sheet coating liquid A) was obtained in a similar manner to the production of the resin layer 1. The resin sheet coating liquid A (varnish-like resin composition) was applied onto a release surface of a PET film to a thickness of approximately 100 µm with an applicator, and dried in a box type oven at 100°C for 10 minutes. Subsequently, two of the PET films each having a dried coating layer were layered such that upper surfaces that were exposed to air were in contact with each other, and subjected to heat pressing (hot plate: 150°C, pressure: 15 MPa, treatment time: 3 minutes). Thus, a resin layer in a B stage state having an average thickness of 190 µm and having PET films on both sides (resin layer 2) was obtained. The density of the resin layer 2 measured in a similar manner to resin layer 1 was 3.2 g/cm³.

### (Method for Producing Resin Layer 3)

In a ball mill (crushing apparatus), 26.128 parts by mass of aluminum oxide [α-alumina, manufactured by Sumitomo Chemical Company, Limited; 18.443 parts by mass of aluminum oxide with a volume average particle size of 3 µm (AA-3) and 7.685 parts by mass of aluminum oxide with a volume average particle size of 0.4 µm (AA-04)] as an inorganic filler, 0.077 parts by mass of 3-phenylaminopropyltrimethoxysilane (KBM -573, manufactured by Shin-Etsu Chemical Co., Ltd.) as a silane coupling agent, 0.099 parts by mass of BYK-106 (manufactured by BYK Japan KK) as a dispersing agent, 4.635 parts by mass of a catechol resorcinol novolac (CRN) resin (manufactured by Hitachi Chemical Company, Ltd., solid content: 50 mass%) dissolved in cyclohexanone as a curing agent, 33.431 parts by mass of cyclohexanone (CHN), and 100 parts by mass of alumina balls (size: 5 mm) were mixed.

After confirmation that the mixture was uniform, 7.513 parts by mass of 1-{(3-methyl-4-oxilanylmethoxy)phenyl}-4-(4-oxilanylmethoxyphenyl)-1-cyclohexene (first epoxy resin) and 0.079 parts by mass of triphenylphosphine (TPP, curing accelerator, manufactured by Wako Pure Chemical Industries, Ltd.) were further mixed and ball-milled for 40 hours to 60 hours. Further, 28.037 parts by mass of a boron nitride filler (HP-40, manufactured by Mizushima Ferroalloy Co., Ltd.) were added and stirred in a ball mill for 30 minutes to 60 minutes, thereby obtaining a varnish-like resin composition (resin sheet coating liquid B). The first epoxy resin is an epoxy resin having a mesogenic group synthesized according to the description of Japanese Patent Application Laid-Open No. 2005-206814.

The resin sheet coating liquid B (varnish-like resin composition) was applied onto a release surface of a PET film to a thickness of approximately 175 µm with an applicator, and dried in a box type oven at 100°C for 10 minutes. Subsequently, two of the PET films each having a dried coating layer were layered such that upper surfaces that were exposed to air were in contact with each other, and subjected to vacuum heat pressing (hot plate: 130°C, pressure: 1 MPa, treatment time: 15 seconds). Thus, a resin layer in a B stage state having an average thickness of 240 µm and having PET films on both sides (resin layer 3) was obtained. The density of the resin layer 3 measured in a similar manner to resin layer 1 was 2.0 g/cm³.

### (Production of Resin Layer 4)

A varnish-like resin composition (resin sheet coating liquid B) was obtained in a similar manner to the production of the resin layer 3. The resin sheet coating liquid B (varnish-like resin composition) was applied onto a release surface of a PET film to a thickness of approximately 175 µm with an applicator, and dried in a box type oven at 100°C for 10 minutes. Subsequently, two of the PET films each having a dried coating layer were layered such that upper surfaces that were exposed to air were in contact with each other, and subjected to vacuum heat pressing (hot plate: 150°C, pressure: 15 MPa, treatment time: 3 minutes). Thus, a resin layer in a B stage state having an average thickness of 200 µm and having PET films on both sides (resin layer 4) was obtained. The density of the resin layer 4 measured in a similar manner to resin layer 1 was 2.2 g/cm³.

### (Production of Adhesive Layer 1)

With a disperser (stirrer), 4.778 parts by mass of an epoxy resin YD-8170C (manufactured by Tohto Kasei Co., Ltd., solid content: 100 mass%), 2.664 parts by mass of an epoxy resin YDCN-703 (manufactured by Tohto Kasei Co., Ltd., solid content: 60 mass%), 6.074 parts by mass of a phenol resin LF-2882 (manufactured by DIC Corporation, solid content: 60 mass%) and 45.785 parts by mass of an alumina slurry (inorganic filler, trade name: ADMAFINE AE2050, manufactured by Admatechs Company Limited, average particle diameter: 0.7 µm, content of alumina particles: 76 mass%, content of phenol resin LF-2882: 1.9 mass%) were mixed for approximately 15 minutes.
Further, 38.855 parts by mass of an acrylic rubber HTR-860P-3 (manufactured by Nagase ChemteX Corporation, solid content: 12 mass%, weight average molecular weight: 800000, glass transition temperature: 12°C), 0.041 parts by mass of a silane coupling agent A-189 (manufactured by Nippon Unicar Company Limited, solid content: 100 mass%), 0.165 parts by mass of a silane coupling agent A-1160 (manufactured by Nippon Unicar Company Limited, solid content: 50 mass%) and 1.647 parts by mass of 2PZ-CN (manufactured by Shikoku Chemicals Corporation, solid content: 4 mass%, diluted with solvent) as a curing accelerator were added and mixed for approximately 15 minutes with a disperser, thereby obtaining a resin composition for an adhesive layer (adhesive layer varnish).

The obtained adhesive layer varnish was applied onto a PET film that had been subjected to a release treatment with a comma coater. The coating was carried out at a comma gap of 40 µm, and the coating layer was dried at 100°C for approximately 3 minutes, thereby obtaining an adhesive layer 1 having an average thickness of 10 µm and having a PET film on one surface.

### (Production of Adhesive Layers 2 and 3)

With a disperser (stirrer), 4.778 parts by mass of an epoxy resin YD-8170C (manufactured by Tohto Kasei Co., Ltd., solid content: 100 mass%), 2.664 parts by mass of an epoxy resin YDCN-703 (manufactured by Tohto Kasei Co., Ltd., solid content: 60 mass%), 5.349 parts by mass of a phenol resin LF-2882 (manufactured by DIC Corporation, solid content: 60 mass%) and 68.687 parts by mass of an alumina slurry (inorganic filler, trade name: ADMAFINE AE2050, manufactured by Admatechs Company Limited, average particle diameter: 0.7 µm, content of alumina particles: 76 mass%, content of phenol resin LF-2882: 1.9 mass%) were mixed for approximately 15 minutes.
Further, 38.855 parts by mass of an acrylic rubber HTR-860P-3 (manufactured by Nagase ChemteX Corporation, solid content: 12 mass%, weight average molecular weight: 800000, glass transition temperature: 12°C), 0.041 parts by mass of a silane coupling agent A-189 (manufactured by Nippon Unicar Company Limited, solid content: 100 mass%), 0.165 parts by mass of a silane coupling agent A-1160 (manufactured by Nippon Unicar Company Limited, solid content: 50 mass%) and 1.647 parts by mass of 2PZ-CN (manufactured by Shikoku Chemicals Corporation, solid content: 4 mass%, diluted with solvent) as a curing accelerator were added and mixed for approximately 15 minutes with a disperser, thereby obtaining a resin composition for an adhesive layer (adhesive layer varnish).

The obtained adhesive layer varnish was applied onto a PET film that had been subjected to a release treatment with a comma coater. The coating was carried out at a comma gap of 40 µm, and the coating layer was dried at 100°C for approximately 3 minutes, thereby obtaining an adhesive layer 2 having an average thickness of 10 µm and having a PET film on one surface. Further, the coating was carried out at a comma gap of 70 µm, and the coating layer was dried at 100°C for approximately 10 minutes, thereby obtaining an adhesive layer 3 having an average thickness of 20 µm and having a PET film on one surface.

### (Production of Adhesive Layer 4)

With a disperser (stirrer), 4.778 parts by mass of an epoxy resin YD-8170C (manufactured by Tohto Kasei Co., Ltd., solid content: 100 mass%), 2.664 parts by mass of an epoxy resin YDCN-703 (manufactured by Tohto Kasei Co., Ltd., solid content: 60 mass%), 7.246 parts by mass of a phenol resin LF-2882 (manufactured by DIC Corporation, solid content: 60 mass%) and 8.867 parts by mass of an alumina slurry (inorganic filler, trade name: ADMAFINE AE2050, manufactured by Admatechs Company Limited, average particle diameter: 0.7 µm, content of alumina particles: 76 mass%, content of phenol resin LF-2882: 1.9 mass%) were mixed for approximately 15 minutes.
Further, 38.855 parts by mass of an acrylic rubber HTR-860P-3 (manufactured by Nagase ChemteX Corporation, solid content: 12 mass%, weight average molecular weight: 800000, glass transition temperature: 12°C), 0.041 parts by mass of a silane coupling agent A-189 (manufactured by Nippon Unicar Company Limited, solid content: 100 mass%), 0.165 parts by mass of a silane coupling agent A-1160 (manufactured by Nippon Unicar Company Limited, solid content: 50 mass%) and 1.647 parts by mass of 2PZ-CN (manufactured by Shikoku Chemicals Corporation, solid content: 4 mass%, diluted with solvent) as a curing accelerator were added and mixed for approximately 15 minutes with a disperser, thereby obtaining a resin composition for an adhesive layer (adhesive layer varnish).

The obtained adhesive layer varnish was applied onto a PET film that had been subjected to a release treatment. The coating was carried out at a comma gap of 40 µm, and the coating layer was dried at 100°C for approximately 3 minutes, thereby obtaining an adhesive layer 4 having an average thickness of 10 µm and having a PET film on one surface.

### (Production of Adhesive Layer 5)

With a disperser (stirrer), 4.778 parts by mass of an epoxy resin YD-8170C (manufactured by Tohto Kasei Co., Ltd., solid content: 100 mass%), 2.664 parts by mass of an epoxy resin YDCN-703 (manufactured by Tohto Kasei Co., Ltd., solid content: 60 mass%), 7.091 parts by mass of a phenol resin LF-2882 (manufactured by DIC Corporation, solid content: 60 mass%) and 13.766 parts by mass of an alumina slurry (inorganic filler, trade name: ADMAFINE AE2050, manufactured by Admatechs Company Limited, average particle diameter: 0.7 µm, content of alumina particles: 76 mass%, content of phenol resin LF-2882: 1.9 mass%) were mixed for approximately 15 minutes.
Further, 38.855 parts by mass of an acrylic rubber HTR-860P-3 (manufactured by Nagase ChemteX Corporation, solid content of 12 mass%, weight average molecular weight of 800000, glass transition temperature of 12°C), 0.041 part by mass of a silane coupling agent A-189 (manufactured by Nippon Unicar Company Limited, solid content of 100 mass%), 0.165 part by mass of a silane coupling agent A-1160 (manufactured by Nippon Unicar Company Limited, solid content of 50 mass%), and 1.647 parts by mass of 2PZ-CN (manufactured by Shikoku Chemicals Corporation, solid content: 4 mass%, diluted with solvent) as a curing accelerator were added and stirred for about 15 minutes by a disperser to obtain a resin composition for an adhesive layer (adhesive layer varnish).

With a comma coater, the obtained adhesive layer varnish was applied onto a PET film subjected to mold release treatment. The coating was carried out at a comma gap of 40 µm and drying at 100°C was performed for about 3 minutes to obtain an adhesive layer 5 having an average thickness of 10 µm, of which one surface is provided with a PET film.

### (Production of Adhesive Layer 6)

With a disperser (stirrer), 4.778 parts by mass of an epoxy resin YD-8170C (manufactured by Tohto Kasei Co., Ltd., solid content: 100 mass%), 2.664 parts by mass of an epoxy resin YDCN-703 (manufactured by Tohto Kasei Co., Ltd., solid content: 60 mass%), 6.991 parts by mass of a phenol resin LF-2882 (manufactured by DIC Corporation, solid content: 60 mass%) and 16.909 parts by mass of an alumina slurry (inorganic filler, trade name: ADMAFINE AE2050, manufactured by Admatechs Company Limited, average particle diameter: 0.7 µm, content of alumina particles: 76 mass%, content of phenol resin LF-2882: 1.9 mass%) were mixed for approximately 15 minutes.

Further, 38.855 parts by mass of an acrylic rubber HTR-860P-3 (manufactured by Nagase ChemteX Corporation, solid content: 12 mass%, weight average molecular weight: 800000, glass transition temperature: 12°C), 0.041 parts by mass of a silane coupling agent A-189 (manufactured by Nippon Unicar Company Limited, solid content: 100 mass%), 0.165 parts by mass of a silane coupling agent A-1160 (manufactured by Nippon Unicar Company Limited, solid content: 50 mass%) and 1.647 parts by mass of 2PZ-CN (manufactured by Shikoku Chemicals Corporation, solid content: 4 mass%, diluted with solvent) as a curing accelerator were added and mixed for approximately 15 minutes with a disperser, thereby obtaining a resin composition for an adhesive layer (adhesive layer varnish).

With a comma coater, the obtained adhesive layer varnish was applied onto a PET film that had been subjected to a release treatment. The coating was carried out at a comma gap of 40 µm, and the coating layer was dried at 100°C for approximately 3 minutes, thereby obtaining an adhesive layer 6 having an average thickness of 10 µm and having a PET film on one surface.

### (Production of Adhesive Layer 7)

With a disperser (stirrer), 4.778 parts by mass of an epoxy resin YD-8170C (manufactured by Tohto Kasei Co., Ltd., solid content: 100 mass%), 2.664 parts by mass of an epoxy resin YDCN-703 (manufactured by Tohto Kasei Co., Ltd., solid content: 60 mass%), 4.865 parts by mass of a phenol resin LF-2882 (manufactured by DIC Corporation, solid content: 60 mass%) and 83.962 parts by mass of an alumina slurry (inorganic filler, trade name: ADMAFINE AE2050, manufactured by Admatechs Company Limited, average particle diameter: 0.7 µm, content of alumina particles: 76 mass%, content of phenol resin LF-2882: 1.9 mass%) were mixed for approximately 15 minutes.
Further, 38.855 parts by mass of an acrylic rubber HTR-860P-3 (manufactured by Nagase ChemteX Corporation, solid content: 12 mass%, weight average molecular weight: 800000, glass transition temperature: 12°C), 0.041 parts by mass of a silane coupling agent A-189 (manufactured by Nippon Unicar Company Limited, solid content: 100 mass%), 0.165 parts by mass of a silane coupling agent A-1160 (manufactured by Nippon Unicar Company Limited, solid content: 50 mass%) and 1.647 parts by mass of 2PZ-CN (manufactured by Shikoku Chemicals Corporation, solid content: 4 mass%, diluted with solvent) as a curing accelerator were added and mixed for approximately 15 minutes with a disperser, thereby obtaining a resin composition for an adhesive layer (adhesive layer varnish).

With a comma coater, the obtained adhesive layer varnish was applied onto a PET film that had been subjected to a release treatment. The coating was carried out at a comma gap of 40 µm, and the coating layer was dried at 100°C for approximately 3 minutes, thereby obtaining an adhesive layer 7 having an average thickness of 10 µm and having a PET film on one surface.

### (Production of Adhesive Layer 8)

With a comma coater, a modified polyamide-imide resin varnish (trade name: KS 6003, manufactured by Hitachi Chemical Company, Ltd., solid content: 40 mass%) was applied onto a PET film that had been subjected to a release treatment. The coating was carried out at a comma gap of 40 µm, and the coating layer was dried in a conveyer-type drying oven at 130°C to 140°C for approximately 8 minutes, thereby obtaining an adhesive layer 8 having an average thickness of 10 µm.

### (Production of Adhesive Layer 9)

With a disperser (stirrer), 4.778 parts by mass of an epoxy resin YD-8170C (manufactured by Tohto Kasei Co., Ltd., solid content: 100 mass%), 2.664 parts by mass of an epoxy resin YDCN-703 (manufactured by Tohto Kasei Co., Ltd., solid content: 60 mass%), 7.308 parts by mass of a phenol resin LF-2882 (manufactured by DIC Corporation, solid content: 60 mass%) and 5.160 parts by mass of an alumina slurry (inorganic filler, trade name: ADMAFINE AE2050, manufactured by Admatechs Company Limited, average particle diameter: 0.7 µm, content of alumina particles: 76 mass%, content of phenol resin LF-2882: 1.9 mass%) were mixed for approximately 15 minutes.
Further, 38.855 parts by mass of an acrylic rubber HTR-860P-3 (manufactured by Nagase ChemteX Corporation, solid content: 12 mass%, weight average molecular weight: 800000, glass transition temperature: 12°C), 0.041 parts by mass of a silane coupling agent A-189 (manufactured by Nippon Unicar Company Limited, solid content: 100 mass%), 0.165 parts by mass of a silane coupling agent A-1160 (manufactured by Nippon Unicar Company Limited, solid content: 50 mass%) and 1.647 parts by mass of 2PZ-CN (manufactured by Shikoku Chemicals Corporation, solid content: 4 mass%, diluted with solvent) as a curing accelerator were added and mixed for approximately 15 minutes with a disperser, thereby obtaining a resin composition for an adhesive layer (adhesive layer varnish).

With a comma coater, the obtained adhesive layer varnish was applied onto a PET film that had been subjected to a release treatment. The coating was carried out at a comma gap of 40 µm, and the coating layer was dried at 100°C for approximately 3 minutes, thereby obtaining an adhesive layer 9 having an average thickness of 10 µm and having a PET film on one surface.

### (Example 1: Production of Multilayer Resin Sheet 1)

The PET film on one surface of the resin layer 1 was removed, and the resin layer 1 and the adhesive layer 1 were layered such that the exposed surface of the resin layer 1 and the surface of the adhesive layer 1 not having a PET film faced each other. The adhesive layer was bonded by vacuum heat pressing, whereby a multilayer resin sheet 1 having PET films on both surfaces was prepared. The bonding was carried out at a hot plate temperature of 130°C, a pressure of 1 MPa, and a time of 15 seconds.

### (Example 2: Production of Multilayer Resin Sheet 2)

The PET films on both surfaces of the resin layer 1 were removed, and the resin layer 1 and the adhesive layers 1 were layered such that the exposed surfaces of the resin layer 1 and the surfaces of the adhesive layers 1 not having a PET film faced each other. The adhesive layers were bonded by vacuum heat pressing, whereby a multilayer resin sheet 2 having PET films on both surfaces was prepared. The bonding was carried out at a hot plate temperature of 130°C, a pressure of 1 MPa, and a time of 15 seconds.

### (Example 3: Production of Multilayer Resin Sheet 3)

The PET film on one surface of the resin layer 2 was removed, and the resin layer 2 and the adhesive layer 1 were layered such that the exposed surface of the resin layer 2 and the surface of the adhesive layer 1 not having a PET film faced each other. The adhesive layer was bonded by vacuum heat pressing, whereby a multilayer resin sheet 4 having PET films on both surfaces was prepared. The bonding was carried out at a hot plate temperature of 150°C, a pressure of 15 MPa, and a time of 3 minutes.

### (Example 4: Production of Multilayer Resin Sheet 4)

The PET films on both surfaces of the resin layer 2 were removed, and the resin layer 2 and the adhesive layers 1 were layered such that the exposed surfaces of the resin layer 2 and the surfaces of the adhesive layers 1 not having a PET film faced each other. The adhesive layers were bonded by vacuum heat pressing, whereby a multilayer resin sheet 4 having PET films on both surfaces was prepared. The bonding was carried out at a hot plate temperature of 150°C, a pressure of 15 MPa, and a time of 3 minutes.

### (Example 5: Production of Multilayer Resin Sheet 5)

The PET film on one surface of the resin layer 3 was removed, and the resin layer 3 and the adhesive layer 1 were layered such that the exposed surface of the resin layer 3 and the surface of the adhesive layer 1 not having a PET film faced each other. The adhesive layer was bonded by vacuum heat pressing, whereby a multilayer resin sheet 5 was prepared. The bonding was carried out at a hot plate temperature of 130°C, a pressure of 1 MPa, and a time of 15 seconds.

### (Example 6: Production of Multilayer Resin Sheet 6)

The PET films on both surfaces of the resin layer 3 were removed, and the resin layer 3 and the adhesive layers 1 were layered such that the exposed surfaces of the resin layer 3 and the surfaces of the adhesive layers 1 not having a PET film faced each other. The adhesive layers were bonded by vacuum heat pressing, whereby a multilayer resin sheet 6 having PET films on both surfaces was prepared. The bonding was carried out at a hot plate temperature of 130°C, a pressure of 1 MPa, and a time of 15 seconds.

### (Example 7: Production of Multilayer Resin Sheet 7)

The PET film on one surface of the resin layer 4 was removed, and the resin layer 4 and the adhesive layer 1 were layered such that the exposed surface of the resin layer 4 and the surface of the adhesive layer 1 not having a PET film faced each other. The adhesive layer was bonded by vacuum heat pressing, whereby a multilayer resin sheet 7 having PET films on both surfaces was prepared. The bonding was carried out at a hot plate temperature of 150°C, a pressure of 15 MPa, and a time of 3 minutes.

### (Example 8: Production of Multilayer Resin Sheet 8)

The PET films on both surfaces of the resin layer 4 were removed, and the resin layer 4 and the adhesive layers 1 were layered such that the exposed surfaces of the resin layer 4 and the surfaces of the adhesive layers 1 not having a PET film faced each other. The adhesive layers were bonded by vacuum heat pressing, whereby a multilayer resin sheet 8 having PET films on both surfaces was prepared. The bonding was carried out at a hot plate temperature of 150°C, a pressure of 15 MPa, and a time of 3 minutes.

### (Example 9: Production of Multilayer Resin Sheet 9)

The PET films on both surfaces of the resin layer 2 were removed, and the resin layer 2 and the adhesive layers 1 were layered such that the exposed surfaces of the resin layer 2 and the surfaces of the adhesive layers 1 not having a PET film faced each other. The adhesive layers were bonded by vacuum heat pressing, whereby a multilayer resin sheet 9 having PET films on both surfaces was prepared. The bonding was carried out at a hot plate temperature of 150°C, a pressure of 15 MPa, and a time of 3 minutes.

### (Example 10: Production of Multilayer Resin Sheet 10)

The PET films on both surfaces of the resin layer 4 were removed, and the resin layer 4 and the adhesive layers 2 were layered such that the exposed surfaces of the resin layer 4 and the surfaces of the adhesive layers 2 not having a PET film faced each other. The adhesive layers were bonded by vacuum heat pressing, whereby a multilayer resin sheet 10 having PET films on both surfaces was prepared. The bonding was carried out at a hot plate temperature of 150°C, a pressure of 15 MPa, and a time of 3 minutes.

### (Example 11: Production of Multilayer Resin Sheet 11)

The PET films on both surfaces of the resin layer 2 were removed, and the resin layer 2 and the adhesive layers 3 were layered such that the exposed surfaces of the resin layer 2 and the surfaces of the adhesive layers 3 not having a PET film faced each other. The adhesive layers were bonded by vacuum heat pressing, whereby a multilayer resin sheet 11 having PET films on both surfaces was prepared. The bonding was carried out at a hot plate temperature of 150°C, a pressure of 15 MPa, and a time of 3 minutes.

### (Example 12: Production of Multilayer Resin Sheet 12)

The PET films on both surfaces of the resin layer 4 were removed, and the resin layer 4 and the adhesive layers 3 were layered such that the exposed surfaces of the resin layer 4 and the surfaces of the adhesive layers 3 not having a PET film faced each other. The adhesive layers were bonded by vacuum heat pressing, whereby a multilayer resin sheet 12 having PET films on both surfaces was prepared. The bonding was carried out at a hot plate temperature of 150°C, a pressure of 15 MPa, and a time of 3 minutes.

### (Example 13: Production of Multilayer Resin Sheet 13)

The PET films on both surfaces of the resin layer 2 were removed, and the resin layer 2 and the adhesive layers 4 were layered such that the exposed surfaces of the resin layer 2 and the surfaces of the adhesive layers 4 not having a PET film faced each other. The adhesive layers were bonded by vacuum heat pressing, whereby a multilayer resin sheet 13 having PET films on both surfaces was prepared. The bonding was carried out at a hot plate temperature of 150°C, a pressure of 15 MPa, and a time of 3 minutes.

### (Example 14: Production of Multilayer Resin Sheet 14)

The PET films on both surfaces of the resin layer 4 were removed, and the resin layer 4 and the adhesive layers 4 were layered such that the exposed surfaces of the resin layer 4 and the surfaces of the adhesive layers 4 not having a PET film faced each other. The adhesive layers were bonded by vacuum heat pressing, whereby a multilayer resin sheet 14 having PET films on both surfaces was prepared. The bonding was carried out at a hot plate temperature of 150°C, a pressure of 15 MPa, and a time of 3 minutes.

### (Example 15: Production of Multilayer Resin Sheet 15)

The PET films on both surfaces of the resin layer 2 were removed, and the resin layer 2 and the adhesive layers 5 were layered such that the exposed surfaces of the resin layer 2 and the surfaces of the adhesive layers 5 not having a PET film faced each other. The adhesive layers were bonded by vacuum heat pressing, whereby a multilayer resin sheet 15 having PET films on both surfaces was prepared. The bonding was carried out at a hot plate temperature of 150°C, a pressure of 15 MPa, and a time of 3 minutes.

### (Example 16: Production of Multilayer Resin Sheet 16)

The PET films on both surfaces of the resin layer 4 were removed, and the resin layer 4 and the adhesive layers 5 were layered such that the exposed surfaces of the resin layer 4 and the surfaces of the adhesive layers 5 not having a PET film faced each other. The adhesive layers were bonded by vacuum heat pressing, whereby a multilayer resin sheet 16 having PET films on both surfaces was prepared. The bonding was carried out at a hot plate temperature of 150°C, a pressure of 15 MPa, and a time of 3 minutes.

### (Example 17: Production of Multilayer Resin Sheet 17)

The PET films on both surfaces of the resin layer 2 were removed, and the resin layer 2 and the adhesive layers 6 were layered such that the exposed surfaces of the resin layer 2 and the surfaces of the adhesive layers 6 not having a PET film faced each other. The adhesive layers were bonded by vacuum heat pressing, whereby a multilayer resin sheet 17 having PET films on both surfaces was prepared. The bonding was carried out at a hot plate temperature of 150°C, a pressure of 15 MPa, and a time of 3 minutes.

### (Example 18: Production of Multilayer Resin Sheet 18)

The PET films on both surfaces of the resin layer 4 were removed, and the resin layer 4 and the adhesive layers 6 were layered such that the exposed surfaces of the resin layer 4 and the surfaces of the adhesive layers 6 not having a PET film faced each other. The adhesive layers were bonded by vacuum heat pressing, whereby a multilayer resin sheet 18 having PET films on both surfaces was prepared. The bonding was carried out at a hot plate temperature of 150°C, a pressure of 15 MPa, and a time of 3 minutes.

### (Comparative Example 1)

A resin sheet C1 was prepared without bonding an adhesive layer to the resin layer 2.

### (Comparative Example 2)

A resin sheet C2 was prepared without bonding an adhesive layer to the resin layer 4.

### (Comparative Example 3)

The PET films on both surfaces of the resin layer 2 were removed, and the resin layer 2 and the adhesive layers 7 were layered such that the exposed surfaces of the resin layer 2 and the surfaces of the adhesive layers 7 not having a PET film faced each other. The adhesive layers were bonded by vacuum heat pressing, whereby a multilayer resin sheet C3 having PET films on both surfaces was prepared. The bonding was carried out at a hot plate temperature of 150°C, a pressure of 15 MPa, and a time of 3 minutes.

### (Comparative Example 4)

The PET films on both surfaces of the resin layer 4 were removed, and the resin layer 1 and the adhesive layers 7 were layered such that the exposed surfaces of the resin layer 1 and the surfaces of the adhesive layers 7 not having a PET film faced each other. The adhesive layers were bonded by vacuum heat pressing, whereby a multilayer resin sheet C4 having PET films on both surfaces was prepared. The bonding was carried out at a hot plate temperature of 150°C, a pressure of 15 MPa, and a time of 3 minutes.

### (Comparative Example 5)

The PET films on both surfaces of the resin layer 1 were removed, and the resin layer 1 and the adhesive layers 8 were layered such that the exposed surfaces of the resin layer 1 and the surfaces of the adhesive layers 8 not having a PET film faced each other. The adhesive layers were bonded by vacuum heat pressing, whereby a multilayer resin sheet C5 having PET films on both surfaces was prepared. The bonding was carried out at a hot plate temperature of 130°C, a pressure of 1 MPa, and a time of 15 seconds.

### (Comparative Example 6)

The PET films on both surfaces of the resin layer 2 were removed, and the resin layer 2 and the adhesive layers 8 were layered such that the exposed surfaces of the resin layer 2 and the surfaces of the adhesive layers 8 not having a PET film faced each other. The adhesive layers were bonded by vacuum heat pressing, whereby a multilayer resin sheet C6 having PET films on both surfaces was prepared. The bonding was carried out at a hot plate temperature of 150°C, a pressure of 15 MPa, and a time of 3 minutes.

### (Comparative Example 7)

The PET films on both surfaces of the resin layer 3 were removed, and the resin layer 3 and the adhesive layers 8 were layered such that the exposed surfaces of the resin layer 3 and the surfaces of the adhesive layers 8 not having a PET film faced each other. The adhesive layers were bonded by vacuum heat pressing, whereby a multilayer resin sheet C7 having PET films on both surfaces was prepared. The bonding was carried out at a hot plate temperature of 130°C, a pressure of 1 MPa, and a time of 15 seconds.

### (Comparative Example 8)

The PET films on both surfaces of the resin layer 4 were removed, and the resin layer 4 and the adhesive layers 8 were layered such that the exposed surfaces of the resin layer 4 and the surfaces of the adhesive layers 8 not having a PET film faced each other. The adhesive layers were bonded by vacuum heat pressing, whereby a multilayer resin sheet C8 having PET films on both surfaces was prepared. The bonding was carried out at a hot plate temperature of 150°C, a pressure of 15 MPa, and a time of 3 minutes.

### (Comparative Example 9)

The PET films on both surfaces of the resin layer 2 were removed, and the resin layer 2 and the adhesive layers 9 were layered such that the exposed surfaces of the resin layer 2 and the surfaces of the adhesive layers 9 not having a PET film faced each other. The adhesive layers were bonded by vacuum heat pressing, whereby a multilayer resin sheet C9 having PET films on both surfaces was prepared. The bonding was carried out at a hot plate temperature of 150°C, a pressure of 15 MPa, and a time of 3 minutes.

### (Comparative Example 10)

The PET films on both surfaces of the resin layer 4 were removed, and the resin layer 4 and the adhesive layers 9 were layered such that the exposed surfaces of the resin layer 4 and the surfaces of the adhesive layers 9 not having a PET film faced each other. The adhesive layers were bonded by vacuum heat pressing, whereby a multilayer resin sheet C 10 having PET films on both surfaces was prepared. The bonding was carried out at a hot plate temperature of 150°C, a pressure of 15 MPa, and a time of 3 minutes.

### <Evaluation>

The multilayer resin sheets and the resin sheets produced by the methods as described above (hereinafter, also referred to as a "sheet for evaluation") were evaluated in terms of flexibility, thermal conductivity, dielectric strength voltage, bonding area and shear strength, in accordance with the methods as described below. The results are shown in Table 1.

### (Average Thicknesses of Resin Layer and Adhesive Layer)

The average thicknesses of the resin layer and the adhesive layer of the sheets for evaluation were measured with a scanning electron microscope (SEM), respectively. Specifically, thicknesses were measured at five points of the resin layer and the adhesive layer by observing a cross-section surface of the sheet for evaluation, and the arithmetic mean value of the measured thicknesses was calculated.

### (Thermal conductivity): Xenon Flash Method

The PET films were removed from both surfaces of the sheet for evaluation, and copper foils having a thickness of 80 µm were positioned on both surfaces of the sheet for evaluation and subjected to pressing (hot plate temperature: 165°C, degree of vacuum: ≤ 1 kPa, pressure: 10 MPa, treatment time: 3 minutes). Then, the sheet for evaluation was subjected to step curing in a box type oven at 140°C for 2 hours, at 165°C for 2 hours, and at 190°C for 2 hours. A cured multilayer resin sheet having copper foils provided on both surfaces was thus obtained as a resin sheet laminate.
Subsequently, only copper was removed from the cured multilayer resin sheet by performing etching with a sodium persulfate solution, and a cured resin sheet was obtained. The thermal diffusivity of the cured resin sheet was measured with a xenon flash method thermal diffusivity measurement apparatus (NANOFLASH LFA 447, manufactured by NETZSCH Corporation).
The measurement was carried out at a measurement temperature of 25±1°C, a measurement voltage of 270 V, an amplitude of 5000, and a pulse width of 0.06 ms. A thermal conductivity (W/mK) was calculated by multiplying the obtained value of thermal diffusivity by a specific heat (Cp: J/g·K) and a density (d: g/cm³) as measured by the methods below. All measurements were carried out at 25±1°C.

The density was measured by an Archimedes method using the cured resin sheet not having copper foils. The specific heat was determined from a difference in input heat quantities by a differential scanning calorimeter (DSC), PYRIS 1 Type, manufactured by Parkin Elmer Corporation. The measurement was carried out at a temperature-raising rate of 5°C/min under a nitrogen atmosphere with high-purity alumina for a reference.

### (Bonding Area)

The sheet for evaluation was sandwiched with an aluminum substrate (thickness: 3 mm) having a size of 30 mm × 40 mm and a copper substrate (thickness: 3 mm) having a size of 20 mm × 30 mm, and was subjected to pressing at a pressure of 3 MPa, 5 MPa or 7 MPa. In each case, the area at which the sheet for evaluation was bonded to the aluminum substrate or the copper substrate after carrying out a predetermined curing process was measured by ultrasonic crack inspection. In a case of a sheet for evaluation having an adhesive layer only on one surface, a copper substrate was positioned to the adhesive layer side. The proportion of the bonded area with respect to the area of the multilayer resin sheet was evaluated in accordance with the following evaluation criteria.

### -Evaluation Criteria-

A: Bonded area is 95% or more
B: Bonded area is from 70% to less than 95%
C: Bonded area is less than 70%

### (Flexibility)

The sheet for evaluation (prior to curing) was cut into a strip of 10 mm × 100 mm, and the PET films on both surfaces were peeled off. The strip was bent with a mandrel bend tester, and the minimum value of diameter at which the strip did not crack was measured. The case in which the minimum value was 8 mm or more was evaluated as D, the case in which the minimum value was from 6 mm to less than 8 mm was evaluated as C, the case in which the minimum value was from 4 mm to less than 6 mm was evaluated as B, and the case in which the minimum value was less than 4 mm was evaluated as A.

### (Dielectric Strength Voltage)

The dielectric strength voltage was measured according to ASTM D149 and JIS C2110. Specifically, a cured resin sheet was obtained from the sheet for evaluation in a manner similar to the above, and the cured resin sheet was cut into a size of 5 cm × 5 cm with a cutter. A copper layer in the shape of a circle with a diameter of 20 mm was positioned on one surface of the cured resin sheet, and the whole area of the other side was covered with aluminum, thereby preparing a sample. Electrodes were positioned so as to sandwich the sample, and a voltage was increased at a rate of 500 V/s from zero in an electrically insulating oil. A voltage (unit: kV) at which dielectric breakdown occurred was determined.

### (Shear Strength)

The shear strength was measured according to JIS K6850. The PET films were removed from both surfaces of the resin sheet, and the resin sheet was sandwiched by copper plates. Then, vacuum heat pressing (hot plate temperature: 175°C, degree of vacuum: ≤ 1 kPa, pressure: 15 MPa, treatment time: 5 minutes) was performed, and step curing was performed at 160°C for 30 minutes and at 190°C for 2 hours in a box type oven. Thereafter, the shear adhesive strength of a metal workpiece to which the resin sheet was attached was measured with a TENSILON universal tester RTC-1350A, manufactured by Orientec Co., Ltd., at a testing rate of 1 mm/min.

**Table 1**

| | Resin Layer | | | | Adhesive Layer | | | Pressing Condition | Adhesive Layer | Flexibility | Thermal conductivit y (W/mK) | Dielectric Strength Voltage [kV] | Bonding Area | | | Shear Strength (MPa) | |
|---|---|---|---|---|---|---|---|---|---|---|---|---|---|---|---|---|---|
| | Type | Inorganic Filler Content (mass%) | Average Thicknes s (µm) | Density (g/cm³) | Type | Inorganic Filler Content (mass%) | Average Thickness (µm) | | | | | | 3 MPa | 5 MPa | 7 MPa | 25°C | 170°C |
| Example 1 | 1 | 88.3 | 200 | 3.2 | 1 | 68.9 | 10 | Low pressure | One | A | 7.2 | 6.3 | A | A | A | 10 | 5 |
| Example 2 | 1 | 88.3 | 200 | 3.2 | 1 | 68.9 | 10 | Low pressure | Both | A | 5.7 | 8.3 | A | A | A | 20 | 7 |
| Example 3 | 2 | 88.3 | 190 | 3.2 | 1 | 68.9 | 10 | High pressure | One | A | 7.3 | 6.5 | A | A | A | 10 | 5 |
| Example 4 | 2 | 88.3 | 190 | 3.2 | 1 | 68.9 | 10 | High pressure | Both | A | 5.8 | 8.4 | A | A | A | 20 | 7 |
| Example 5 | 3 | 81.4 | 240 | 2.0 | 1 | 68.9 | 10 | Low pressure | One | A | 10.4 | 3.3 | C | B | A | 7 | 4 |
| Example 6 | 3 | 81.4 | 240 | 2.0 | 1 | 68.9 | 10 | Low pressure | Both | A | 8.3 | 4.3 | A | A | A | 9 | 6 |
| Example 7 | 4 | 81.4 | 200 | 2.2 | 1 | 68.9 | 10 | High pressure | One | A | 12.4 | 4.5 | C | B | A | 7 | 4 |
| Example 8 | 4 | 81.4 | 200 | 2.2 | 1 | 68.9 | 10 | High pressure | Both | A | 10.6 | 6.3 | A | A | A | 9 | 6 |
| Example 9 | 2 | 88.3 | 190 | 3.2 | 2 | 76.9 | 10 | High pressure | Both | A | 6.5 | 7.1 | B | A | A | 7 | 4 |
| Example 10 | 4 | 81.4 | 200 | 2.2 | 2 | 76.9 | 10 | High pressure | Both | A | 12.7 | 4.6 | B | A | A | 7 | 4 |
| Example 11 | 2 | 88.3 | 190 | 3.2 | 3 | 76.9 | 20 | High pressure | Both | A | 6.0 | 7.5 | A | A | A | 10 | 5 |
| Example 12 | 4 | 81.4 | 200 | 2.2 | 3 | 76.9 | 20 | High pressure | Both | A | 10.5 | 4.9 | A | A | A | 10 | 5 |
| Example 13 | 2 | 88.3 | 190 | 3.2 | 4 | 30.0 | 10 | High pressure | Both | A | 4.8 | 8.4 | A | A | A | 18 | 4 |
| Example 14 | 4 | 81.4 | 200 | 2.2 | 4 | 30.0 | 10 | High pressure | Both | A | 9.0 | 6.8 | A | A | A | 18 | 4 |
| Example 15 | 2 | 88.3 | 190 | 3.2 | 5 | 40.0 | 10 | High pressure | Both | A | 5.0 | 8.5 | A | A | A | 18 | 5 |
| Example 16 | 4 | 81.4 | 200 | 2.2 | 5 | 40.0 | 10 | High pressure | Both | A | 9.2 | 6.5 | A | A | A | 18 | 5 |
| Example 17 | 2 | 88.3 | 190 | 3.2 | 6 | 45.0 | 10 | High pressure | Both | A | 5.2 | 8.3 | A | A | A | 20 | 5 |
| Example18 | 4 | 81.4 | 200 | 2.2 | 6 | 45.0 | 10 | High pressure | Both | A | 9.4 | 6.6 | A | A | A | 20 | 5 |
| Comparative 1 | 2 | 88.3 | 190 | 3.2 | - | - | - | - | - | C | 9.5 | 5.4 | A | A | A | 8 | 5 |
| Comparative 2 | 4 | 81.4 | 200 | 2.2 | - | - | - | - | - | C | 14.8 | 2.8 | C | B | A | 7 | 5 |
| Comparative 3 | 2 | 88.3 | 190 | 3.2 | 7 | 80.3 | 10 | High pressure | Both | D | 3.1 | 5.1 | C | C | B | 3 | 1 |
| Comparative 4 | 4 | 81.4 | 200 | 2.2 | 7 | 80.3 | 10 | High pressure | Both | D | 4.7 | 2.2 | C | C | B | 3 | 1 |
| Comparative 5 | 1 | 88.3 | 200 | 3.2 | 8 | - | 10 | Low pressure | Both | C | 4.5 | 8.5 | A | A | A | 13 | 1 |
| Comparative 6 | 2 | 88.3 | 190 | 3.2 | 8 | - | 10 | High pressure | Both | C | 4.3 | 8.6 | A | A | A | 20 | 1 |
| Comparative 7 | 3 | 81.4 | 240 | 2.0 | 8 | - | 10 | Low pressure | Both | C | 10.5 | 4.5 | A | A | A | 13 | 1 |
| Comparative 8 | 4 | 81.4 | 200 | 2.2 | 8 | - | 10 | High pressure | Both | C | 8.1 | 5.4 | A | A | A | 20 | 1 |
| Comparative 9 | 2 | 88.3 | 190 | 3.2 | 9 | 25.0 | 10 | High pressure | Both | A | 4.2 | 8.2 | A | A | A | 18 | 2 |
| Comparative 10 | 4 | 81.4 | 200 | 2.2 | 9 | 25.0 | 10 | High pressure | Both | A | 8.2 | 5.5 | A | A | A | 18 | 2 |

In Table 1, the pressing conditions are as follows:
Low pressure: 130°C, 1 MPa, 15 seconds
High pressure: 150°C, 15 MPa, 3 minutes

As compared with Comparative Examples 5 to 8, in which a modified polyamide-imide resin that is conventionally used as an adhesive film is used as an adhesive layer, the multilayer resin sheets according to the present invention exhibit a high thermal conductivity, a high dielectric strength voltage, and a high shear strength at high temperature. Comparative Examples 1 and 2, in which an adhesive layer is not provided, exhibits a high thermal conductivity but is inferior in flexibility. Further, when the content of the inorganic filler in the adhesive layer exceeds 80 mass%, thermal conductivity is insufficient, and thermal conductivity, dielectric strength voltage and shear strength are low.
It is seen that the multilayer resin sheets having a resin layer and an adhesive layer according to the present invention exhibit excellent flexibility and a large shear strength.

The disclosures of Japanese Patent Application Nos. 2010-257765 and 2011-064923 are incorporated by reference herein in their entireties. All the literature, patent applications, and technical standards described herein are herein incorporated by reference to the same extent as if each individual literature, patent application, or technical standard was specifically and individually indicated as being incorporated by reference.

## Claims

1. A multilayer resin sheet comprising:
a resin layer that includes a first epoxy resin, a curing agent and an inorganic filler; and
an adhesive layer that is disposed on at least one surface of the resin layer and includes a second epoxy resin and an inorganic filler,
the adhesive layer including the inorganic filler in an amount of from 30 mass% to 80 mass%, and
the resin layer including the inorganic filler in an amount of from 80 mass% to 93 mass%.

2. The multilayer resin sheet according to claim 1, wherein the resin layer has an average thickness of from 50 µm to 500 µm, and the adhesive layer has an average thickness of from 1 µm to 25 µm.

3. The multilayer resin sheet according to claim 1 or 2, wherein the adhesive layer further comprises a high molecular weight component that has a weight average molecular weight of 10000 or more and a glass transition temperature of 50°C or less.

4. The multilayer resin sheet according to any one of claims 1 to 3, wherein the first epoxy resin has a mesogenic group.

5. The multilayer resin sheet according to claim 4, wherein the mesogenic group has an asymmetric structure in a planar structure thereof.

6. The multilayer resin sheet according to claim 4 or 5, wherein the mesogenic group has a structure in which two divalent functional groups that are derived from benzene are linked via a divalent linking group.

7. The multilayer resin sheet according to any one of claims 1 to 6, wherein the curing agent is a phenol novolac resin.

8. The multilayer resin sheet according to claim 7, wherein the phenol novolac resin comprises a compound in which at least one phenol compound selected from a monofunctional phenol and a bifunctional phenol is linked via a methylene chain.

9. The multilayer resin sheet according to claim 8, wherein the phenol compound comprises at least one selected from catechol and resorcinol.

10. The multilayer resin sheet according to any one of claims 1 to 9, wherein the resin layer has a density of from 1.8 g/cm³ to 3.3 g/cm³.

11. A multilayer resin sheet with a metal foil, comprising the multilayer resin sheet according to any one of claims 1 to 10 and a metal foil disposed on at least one adhesive layer of the multilayer resin sheet.

12. A cured multilayer resin sheet that is a cured product of the multilayer resin sheet according to any one of claims 1 to 10.

13. A resin sheet laminate, comprising a cured multilayer resin sheet that is a cured product of the multilayer resin sheet according to any one of claims 1 to 10, and a metal plate or a radiator plate disposed on at least one surface of the cured multilayer resin sheet.

14. A semiconductor device, comprising the resin sheet laminate according to claim 13 and a semiconductor element disposed on the resin sheet laminate.
